# EUROPEAN PATENT APPLICATION

(11) **EP 4 794 367 A1**
(43) Date of publication of application: **19.08.2026**
(21) Application number: 23956411.5
(22) Date of filing: 25.10.2023
(51) Int. Cl.: H04W 16/18

(54) **COMMUNICATION METHOD AND RELATED PRODUCT**

(71) Applicant: HUAWEI TECHNOLOGIES CO., LTD., Shenzhen 518129 (CN)
(72) Inventor: SONG, Yurong, Shenzhen, Guangdong 518129 (CN); WANG, Donghui, Shenzhen, Guangdong 518129 (CN); YAO, Qi, Shenzhen, Guangdong 518129 (CN); LIU, Fei, Shenzhen, Guangdong 518129 (CN)
(74) Representative: MERH-IP Matias Erny Reichl Hoffmann Patentanwälte PartG mbB
(86) International application number: PCT/CN2023/126535
(87) International publication number: WO 2025/086159

(57) **Abstract**

This application discloses a communication method and a related product. This application may be applied to a telecommunication network, and a blockchain function is introduced into the telecommunication network. The method is applied to a first node in the telecommunication network. The method includes: sending a first message, where the first message is for at least one of blockchain capability management, blockchain capability deployment, blockchain setup, blockchain removal, blockchain updating, blockchain configuration, blockchain parameter obtaining, subdomain blockchain deployment, or subdomain blockchain configuration; and receiving a second message, where the second message is for responding to the first message. In embodiments of this application, the first node sends the first message to a second node, to implement at least one of blockchain capability management, blockchain capability deployment, blockchain setup, blockchain removal, blockchain updating, blockchain configuration, blockchain parameter obtaining, subdomain blockchain deployment, or subdomain blockchain configuration in the telecommunication network.

## Description

### TECHNICAL FIELD

This application relates to the communication field, and in particular, to a communication method and a related product.

### BACKGROUND

In essence, a blockchain (blockchain) is a shared database that stores data or information with "unforgeable", "full-process tracking", "traceable", "open and transparent", "collectively maintainable", and other features, and a blockchain technology may be introduced into a telecommunication network.

Some existing mainstream blockchains, such as bitcoin and hyperledger (fabric), integrate all blockchain functions into a same protocol stack. This is inconsistent with a characteristic of dividing a protocol into a management plane (management plane, MP), a control plane (control plane, CP), and a user plane (user plane, UP) in the telecommunication network (or the communication network). Some other blockchains, for example, Ethereum, classify blockchain functions into two categories: connection and transaction transmission. Currently, existing blockchain protocols and protocol stacks cannot be simply directly applied to the telecommunication network. Therefore, a solution for applying the blockchain to the telecommunication network needs to be studied.

### SUMMARY

Embodiments of this application disclose a communication method and a related product, to apply a blockchain to a telecommunication network.

According to a first aspect, an embodiment of this application provides a communication method. The method is applied to a first node in a telecommunication network. The method includes: sending a first message, where the first message is for at least one of blockchain capability management, blockchain capability deployment, blockchain client management, blockchain client deployment, blockchain setup, blockchain removal, blockchain updating, blockchain configuration, blockchain parameter obtaining, subdomain blockchain deployment, or subdomain blockchain configuration; and receiving a second message, where the second message is for responding to the first message.

Existing blockchain protocols and protocol stacks cannot be simply directly applied to the telecommunication network. In this embodiment of this application, the first node sends the first message to a second node, to implement at least one of blockchain capability management, blockchain capability deployment, blockchain setup, blockchain removal, blockchain updating, blockchain configuration, blockchain parameter obtaining, subdomain blockchain deployment, or subdomain blockchain configuration in the telecommunication network.

In a possible implementation, that the first message is for blockchain capability management includes: The first message is for at least one of blockchain capability deletion, enabling, updating, locking, or disabling.

In this implementation, at least one of deleting, enabling, updating, locking, or disabling a blockchain capability of a node can be implemented in the telecommunication network.

In a possible implementation, that the first message is for blockchain client management includes: The first message is for at least one of blockchain client deletion, enabling, updating, locking, or disabling.

In this implementation, at least one of deleting, enabling, updating, locking, or disabling a blockchain client deployed on a node can be implemented in the telecommunication network.

In a possible implementation, that the first message is for blockchain capability enabling includes: The first message is for enabling a blockchain capability of a second node in the telecommunication network, and the first message carries information indicating the blockchain capability of the second node; or the first message is for enabling a blockchain capability of one or more nodes in a first subdomain, the first subdomain includes one or more nodes managed by a second node, the second node is managed by the first node, and the first message carries information indicating the blockchain capability of the one or more nodes, and information indicating a quantity of nodes that support the blockchain capability in the first subdomain.

In this implementation, the blockchain capability of the node can be enabled in the telecommunication network.

In a possible implementation, that the first message is for blockchain capability deployment includes: The first message is for deploying a blockchain capability of a second node in the telecommunication network, the first message carries an installation package for the second node to deploy the blockchain capability and a first profile, and the first profile indicates the blockchain capability of the second node; or the first message is for deploying a blockchain capability of one or more nodes in a first subdomain, the first subdomain includes one or more nodes managed by a second node, the second node is managed by the first node, the first message carries an installation package for the one or more nodes to deploy the blockchain capability, a second profile, and information indicating a quantity of nodes that support the blockchain capability in the first subdomain, and the second profile indicates the blockchain capability of the one or more nodes.

In this implementation, if the first message is for deploying the blockchain capability of the second node in the telecommunication network or deploying the blockchain capability of the one or more nodes in the first subdomain, the blockchain capability may be deployed for the node in the telecommunication network.

In a possible implementation, that the first message is for blockchain client deployment includes: The first message is for deploying a blockchain client of a second node in the telecommunication network, the first message carries an installation package for the second node to deploy the blockchain client and a first profile, and the first profile indicates a blockchain capability of the blockchain client of the second node; or the first message is for deploying a blockchain client of one or more nodes in a first subdomain, the first subdomain includes one or more nodes managed by a second node, the second node is managed by the first node, the first message carries an installation package for the one or more nodes to deploy the blockchain client, a second profile, and information indicating a quantity of nodes that support blockchain client deployment in the first subdomain, and the second profile indicates a blockchain capability of the blockchain client of the one or more nodes.

In this implementation, if the first message is for deploying the blockchain client of the second node in the telecommunication network or deploying the blockchain client of the one or more nodes in the first subdomain, the blockchain client may be deployed for the node in the telecommunication network.

In a possible implementation, the first message is for setting up a blockchain including a second node in the telecommunication network, and the first message carries a profile of the blockchain including the second node; or the first message is for setting up one or more blockchains in a first subdomain, the first subdomain includes one or more nodes managed by a second node, the second node is managed by the first node, and the first message carries a profile of the one or more blockchains.

In this implementation, blockchain setup can be implemented in the telecommunication network.

In a possible implementation, the first message is for updating a blockchain including a second node in the telecommunication network, and the first message carries a profile for updating the blockchain including the second node; or the first message is for updating one or more blockchains in a first subdomain, the first subdomain includes one or more nodes managed by a second node, the second node is managed by the first node, and the first message carries a profile for updating the one or more blockchains.

In this implementation, blockchain updating can be implemented in the telecommunication network.

In a possible implementation, that the first message is for blockchain configuration includes: The first message is for blockchain connection configuration, and the blockchain connection configuration includes at least one of blockchain connection method configuration, blockchain network topology configuration, or blockchain node list configuration.

In this implementation, blockchain connection configuration can be implemented in the telecommunication network.

In a possible implementation, that the first message is for blockchain configuration includes: The first message is for blockchain node configuration, and the blockchain node configuration includes at least one of blockchain node attribute configuration, blockchain node role configuration, or blockchain node running status configuration.

In this implementation, blockchain node configuration can be implemented in the telecommunication network.

In a possible implementation, that the first message is for blockchain parameter obtaining includes: The first message is for at least one of requesting a blockchain profile, subscribing to a blockchain profile, requesting a blockchain identity, requesting a blockchain type, requesting blockchain capability information, or subscribing to blockchain capability information.

In this implementation, at least one of requesting a blockchain profile, subscribing to a blockchain profile, requesting a blockchain identity, requesting a blockchain type, requesting blockchain capability information, or subscribing to blockchain capability information can be implemented in the telecommunication network.

In a possible implementation, sending the first message includes: The first node sends the first message to a second node by using a non-access-stratum protocol, where the first node is a core network element, and the second node is a terminal device; or the first node sends the first message to a second node by using a radio resource control protocol, where the first node is an access network device, and the second node is a terminal device; or the first node sends the first message to a second node by using a next-generation application protocol, where the first node is a core network element, and the second node is an access network device; or the first node sends the first message to a second node by using an Xn interface application procedure protocol, where the first node and the second node are different access network devices.

In this implementation, an existing protocol is reused to send the first message. This introduces a small network change, high compatibility, and low implementation complexity.

In a possible implementation, sending the first message includes: The first node sends the first message by using a blockchain control protocol, where the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

In this implementation, the first node sends the first message by using the blockchain control protocol, so that a blockchain management function can be implemented.

In a possible implementation, the blockchain control protocol is located at an upper layer of a second protocol layer, and the second protocol layer includes a part or all of the following protocol layers: a protocol layer for data packet processing, a protocol layer for transmission, a protocol layer for connection setup, and a protocol layer for channel setup.

In this implementation, the blockchain control protocol is located at the upper layer of the second protocol layer, so that communication can be set up between blockchain nodes based on the second protocol layer.

In a possible implementation, when a second node is a terminal device, sending the first message includes: when the first node is a core network element, sending the first message to the second node by using a first blockchain control protocol; or when the first node is an access network device, sending the first message to the second node by using a second blockchain control protocol, where the second blockchain control protocol is different from the first blockchain control protocol.

In this implementation, when the first node is a core network element, the first message is sent to the second node by using the first blockchain control protocol; and when the first node is an access network device, the first message is sent to the second node by using the second blockchain control protocol, so that a blockchain management function can be implemented.

In this implementation, a blockchain control protocol is divided into the first blockchain control protocol and the second blockchain control protocol. On the one hand, this can be better adapted to a feature of the telecommunication network. On the other hand, after receiving a blockchain control protocol message, an access network device (for example, a base station) can determine, based on a protocol type, whether to unpack the blockchain control protocol message locally, and processing logic is simpler.

In a possible implementation, the method further includes: receiving a third message, where the third message is for requesting to set up a blockchain, and the third message carries a blockchain service requirement parameter, or the third message is for de-registering a blockchain capability of a second node, or the third message is for registering a blockchain capability of a second node.

In this implementation, requesting to set up a blockchain, registering a blockchain capability, or de-registering a blockchain capability can be implemented in the telecommunication network.

According to a second aspect, an embodiment of this application provides another communication method. The method is applied to a second node in a telecommunication network. The method includes: receiving a first message, where the first message is for at least one of blockchain capability management, blockchain capability deployment, blockchain client management, blockchain client deployment, blockchain setup, blockchain removal, blockchain updating, blockchain configuration, blockchain parameter obtaining, subdomain blockchain deployment, or subdomain blockchain configuration; and sending a second message, where the second message is for responding to the first message.

Existing blockchain protocols and protocol stacks cannot be simply directly applied to the telecommunication network. In this embodiment of this application, the second node receives the first message, to implement at least one of blockchain capability management, blockchain capability deployment, blockchain setup, blockchain removal, blockchain updating, blockchain configuration, blockchain parameter obtaining, subdomain blockchain deployment, or subdomain blockchain configuration in the telecommunication network.

In a possible implementation, that the first message is for blockchain capability management includes: The first message is for at least one of blockchain capability deletion, enabling, updating, locking, or disabling.

In this implementation, at least one of deleting, enabling, updating, locking, or disabling a blockchain capability of a node can be implemented in the telecommunication network.

In a possible implementation, that the first message is for blockchain capability deployment includes: The first message is for deploying a blockchain capability of the second node in the telecommunication network, the first message carries an installation package for the second node to deploy the blockchain capability and a first profile, and the first profile indicates the blockchain capability of the second node; or the first message is for deploying a blockchain capability of one or more nodes in a first subdomain, the first subdomain includes one or more nodes managed by the second node, the second node is managed by the first node, the first message carries an installation package for the one or more nodes to deploy the blockchain capability, a second profile, and information indicating a quantity of nodes that support the blockchain capability in the first subdomain, and the second profile indicates the blockchain capability of the one or more nodes.

In this implementation, if the first message is for deploying the blockchain capability of the second node in the telecommunication network or deploying the blockchain capability of the one or more nodes in the first subdomain, the blockchain capability may be deployed for the node in the telecommunication network.

In a possible implementation, that the first message is for blockchain capability enabling includes: The first message is for enabling a blockchain capability of the second node in the telecommunication network, and the first message carries information indicating the blockchain capability of the second node; or the first message is for enabling a blockchain capability of one or more nodes in a first subdomain, the first subdomain includes one or more nodes managed by the second node, the second node is managed by the first node, and the first message carries information indicating the blockchain capability of the one or more nodes, and information indicating a quantity of nodes that support the blockchain capability in the first subdomain.

In this implementation, the blockchain capability of the node can be enabled in the telecommunication network.

In a possible implementation, the first message is for setting up a blockchain including the second node in the telecommunication network, and the first message carries a profile of the blockchain including the second node; or the first message is for setting up one or more blockchains in a first subdomain, the first subdomain includes one or more nodes managed by the second node, the second node is managed by the first node, and the first message carries a profile of the one or more blockchains.

In this implementation, blockchain setup can be implemented in the telecommunication network.

In a possible implementation, the first message is for updating a blockchain including the second node in the telecommunication network, and the first message carries a profile for updating the blockchain including the second node; or the first message is for updating one or more blockchains in a first subdomain, the first subdomain includes one or more nodes managed by the second node, the second node is managed by the first node, and the first message carries a profile for updating the one or more blockchains.

In this implementation, blockchain updating can be implemented in the telecommunication network.

In a possible implementation, that the first message is for blockchain configuration includes: The first message is for blockchain connection configuration, and the blockchain connection configuration includes at least one of blockchain connection method configuration, blockchain network topology configuration, or blockchain node list configuration.

In this implementation, blockchain connection configuration can be implemented in the telecommunication network.

In a possible implementation, that the first message is for blockchain configuration includes: The first message is for blockchain node configuration, and the blockchain node configuration includes at least one of blockchain node attribute configuration, blockchain node role configuration, or blockchain node running status configuration.

In this implementation, blockchain node configuration can be implemented in the telecommunication network.

In a possible implementation, that the first message is for blockchain parameter obtaining includes: The first message is for at least one of requesting a blockchain profile, subscribing to a blockchain profile, requesting a blockchain identity, requesting a blockchain type, requesting blockchain capability information, or subscribing to blockchain capability information.

In this implementation, at least one of requesting a blockchain profile, subscribing to a blockchain profile, requesting a blockchain identity, requesting a blockchain type, requesting blockchain capability information, or subscribing to blockchain capability information can be implemented in the telecommunication network.

In a possible implementation, receiving the first message includes: The second node receives the first message from a first node by using a non-access-stratum protocol, where the first node is an access network device, and the second node is a terminal device; or the first node receives the first message from a first node by using a radio resource control protocol, where the first node is an access network device, and the second node is a terminal device; or the first node receives the first message from a first node by using a next-generation application protocol, where the first node is a core network element, and the second node is an access network device; or the first node receives the first message from a first node by using an Xn interface application procedure protocol, where the first node and the second node are different access network devices.

In this implementation, an existing protocol is reused to receive the first message. This introduces a small network change, high compatibility, and low implementation complexity.

In a possible implementation, receiving the first message includes: The second node receives the first message by using a blockchain control protocol, where the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

In this implementation, the second node receives the first message by using the blockchain control protocol, so that a blockchain management function can be implemented.

In a possible implementation, the blockchain control protocol is located at an upper layer of a second protocol layer, and the second protocol layer includes a part or all of the following protocol layers: a protocol layer for data packet processing, a protocol layer for transmission, a protocol layer for connection setup, and a protocol layer for channel setup.

In a possible implementation, receiving the first message includes: The second node receives the first message from a first node by using a first blockchain control protocol, where the second node is a terminal device, and the first node is a core network element; or the second node receives the first message from a first node by using a second blockchain control protocol, where the second node is a terminal device, the first node is an access network device, and the second blockchain control protocol is different from the first blockchain control protocol.

In this implementation, when the second node is a terminal device and the first node is a core network element, the second node receives the first message from the first node by using the first blockchain control protocol; or when the second node is a terminal device and the first node is an access network device, the second node receives the first message from the first node by using the second blockchain control protocol. This can help the terminal device determine whether the message is from a core network or an access network, and introduces a smaller change to the conventional technology than that introduced by using one layer of protocol.

In a possible implementation, the method further includes: sending a third message, where the third message is for requesting to set up a blockchain, and the third message carries a blockchain service requirement parameter, or the third message is for de-registering a blockchain capability of the second node, or the third message is for registering a blockchain capability of the second node.

In this implementation, requesting to set up a blockchain, registering a blockchain capability, or de-registering a blockchain capability can be implemented in the telecommunication network.

According to a third aspect, an embodiment of this application provides another communication method. The method is applied to a second node in a telecommunication network. The method includes: sending a third message, where the third message is for requesting to set up a blockchain, and the third message carries a blockchain service requirement parameter, or the third message is for de-registering a blockchain capability of the second node, or the third message is for registering a blockchain capability of the second node; and receiving a fourth message, where the fourth message is for responding to the third message.

In this embodiment of this application, requesting to set up a blockchain, registering a blockchain capability, or de-registering a blockchain capability can be implemented in the telecommunication network.

In a possible implementation, sending the third message includes: The second node sends the third message to a first node by using a non-access-stratum protocol, where the second node is a terminal device, and the first node is a core network element; or the second node sends the third message to a first node by using a radio resource control protocol, where the second node is a terminal device, and the first node is an access network device; or the second node sends the third message to a first node by using a next-generation application protocol, where the second node is an access network device, and the first node is an access network device; or the second node sends the third message to a first node by using an Xn interface application procedure protocol, where the second node and the first node are different access network devices.

In this implementation, an existing protocol is reused to send the third message. This introduces a small network change, high compatibility, and low implementation complexity.

In a possible implementation, sending the third message includes: The second node sends the third message by using a blockchain control protocol, where the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

In this implementation, the first node sends the third message by using the blockchain control protocol, so that a blockchain management function can be implemented.

In a possible implementation, the blockchain control protocol is located at an upper layer of a second protocol layer, and the second protocol layer includes a part or all of the following protocol layers: a protocol layer for data packet processing, a protocol layer for transmission, a protocol layer for connection setup, and a protocol layer for channel setup.

In this implementation, the blockchain control protocol is located at the upper layer of the second protocol layer, so that communication can be set up between blockchain nodes based on the second protocol layer.

In a possible implementation, sending the third message includes: when a first node is a core network element, the second node sends the third message to the first node by using a first blockchain control protocol; or when a first node is an access network device, the second node sends the third message to the first node by using a second blockchain control protocol, where the second blockchain control protocol is different from the first blockchain control protocol.

In this implementation, a blockchain control protocol is divided into the first blockchain control protocol and the second blockchain control protocol. On the one hand, this can be better adapted to a feature of the telecommunication network. On the other hand, after receiving a blockchain control protocol message, an access network device (for example, a base station) can determine, based on a protocol type, whether to unpack the blockchain control protocol message locally, and processing logic is simpler.

According to a fourth aspect, an embodiment of this application provides another communication method. The method is applied to a first node in a telecommunication network. The method includes: receiving a third message, where the third message is for requesting to set up a blockchain, and the third message carries a blockchain service requirement parameter, or the third message is for de-registering a blockchain capability of a second node, or the third message is for registering a blockchain capability of a second node; and sending a fourth message, where the fourth message is for responding to the third message.

In this embodiment of this application, requesting to set up a blockchain, registering a blockchain capability, or de-registering a blockchain capability can be implemented in the telecommunication network.

In a possible implementation, receiving the third message includes: The first node receives the third message from the second node by using a non-access-stratum protocol, where the second node is a terminal device, and the first node is a core network element; or the second node receives the third message from the second node by using a radio resource control protocol, where the second node is a terminal device, and the first node is an access network device; or the second node receives the third message from the second node by using a next-generation application protocol, where the second node is an access network device, and the first node is an access network device; or the second node receives the third message from the second node by using an Xn interface application procedure protocol, where the second node and the first node are different access network devices.

In this implementation, an existing protocol is reused to receive the third message. This introduces a small network change, high compatibility, and low implementation complexity.

In a possible implementation, receiving the third message includes: The first node receives the third message by using a blockchain control protocol, where the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

In this implementation, the first node receives the third message by using the blockchain control protocol, so that a blockchain management function can be implemented.

In a possible implementation, the blockchain control protocol is located at an upper layer of a second protocol layer, and the second protocol layer includes a part or all of the following protocol layers: a protocol layer for data packet processing, a protocol layer for transmission, a protocol layer for connection setup, and a protocol layer for channel setup.

In this implementation, the blockchain control protocol is located at the upper layer of the second protocol layer, so that communication can be set up between blockchain nodes based on the second protocol layer.

In a possible implementation, receiving the third message includes: When the first node is a core network element, the first node receives the third message by using a first blockchain control protocol; or when the first node is an access network device, the first node receives the third message by using a second blockchain control protocol, where the second blockchain control protocol is different from the first blockchain control protocol.

In this implementation, a blockchain control protocol is divided into the first blockchain control protocol and the second blockchain control protocol. On the one hand, this can be better adapted to a feature of the telecommunication network. On the other hand, after receiving a blockchain control protocol message, an access network device (for example, a base station) can determine, based on a protocol type, whether to unpack the blockchain control protocol message locally, and processing logic is simpler.

In a possible implementation, the first node is an access network device, and after receiving the third message, the method further includes: when the first node has a blockchain capability and a blockchain control function is deployed on the first node, parsing the third message, where the blockchain control function is a blockchain management and/or configuration function; or when the first node has a blockchain capability and a blockchain control function is not deployed on the first node, forwarding the third message to a third node to which the first node belongs, where the blockchain control function is deployed on the third node; or when the first node does not have a blockchain capability, forwarding the third message to a node on which the blockchain control function is deployed. For example, the first node is an access network device.

In this implementation, the first node parses the third message by itself or forwards the third message to the node on which the blockchain control function is deployed, so that the third message can be processed by the node on which the blockchain control function is deployed.

According to a fifth aspect, an embodiment of this application provides a communication apparatus. The communication apparatus has a function of implementing behavior in the method embodiment in the first aspect. The communication apparatus may be a network device, or may be a component (for example, a processor, a chip, or a chip system) of the network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a first message. The transceiver module is configured to: send the first message, where the first message is for at least one of blockchain capability management, blockchain capability deployment, blockchain client management, blockchain client deployment, blockchain setup, blockchain removal, blockchain updating, blockchain configuration, blockchain parameter obtaining, subdomain blockchain deployment, or subdomain blockchain configuration; and receive a second message, where the second message is for responding to the first message.

In a possible implementation, the transceiver module is specifically configured to: send the first message to a second node by using a non-access-stratum protocol, where the first node is a core network element, and the second node is a terminal device; or send the first message to a second node by using a radio resource control protocol, where the first node is an access network device, and the second node is a terminal device; or send the first message to a second node by using a next-generation application protocol, where the first node is a core network element, and the second node is an access network device; or send the first message to a second node by using an Xn interface application procedure protocol, where the first node and the second node are different access network devices.

In a possible implementation, the transceiver module is specifically configured to send the first message by using a blockchain control protocol, where the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

In a possible implementation, when a second node is a terminal device, the transceiver module is specifically configured to: when the first node is a core network element, send the first message to the second node by using a first blockchain control protocol; or when a second node is a terminal device, the transceiver module is specifically configured to: when the first node is an access network device, send the first message to the second node by using a second blockchain control protocol, where the second blockchain control protocol is different from the first blockchain control protocol.

In a possible implementation, the transceiver module is further configured to receive a third message, where the third message is for requesting to set up a blockchain, and the third message carries a blockchain service requirement parameter, or the third message is for de-registering a blockchain capability of a second node, or the third message is for registering a blockchain capability of a second node.

For possible implementations of the communication apparatus in the fifth aspect, refer to the possible implementations of the first aspect.

For technical effect brought by the possible implementations of the fifth aspect, refer to the descriptions of the technical effect of the possible implementations of the first aspect.

According to a sixth aspect, an embodiment of this application provides another communication apparatus. The communication apparatus has a function of implementing behavior in the method embodiment in the second aspect. The communication apparatus may be a network device, or may be a component (for example, a processor, a chip, or a chip system) of the network device, or may be a logical module or software that can implement all or a part of functions of the network device. Alternatively, the communication apparatus may be a terminal device, or may be a component (for example, a processor, a chip, or a chip system) of the terminal device, or may be a logical module or software that can implement all or a part of functions of the terminal device. In this application, the network device may include an access network device (for example, a base station), a core network device, or the like. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first message, where the first message is for at least one of blockchain capability management, blockchain capability deployment, blockchain client management, blockchain client deployment, blockchain setup, blockchain removal, blockchain updating, blockchain configuration, blockchain parameter obtaining, subdomain blockchain deployment, or subdomain blockchain configuration. The processing module is configured to generate a second message. The transceiver module is further configured to send the second message, where the second message is for responding to the first message.

In a possible implementation, the transceiver module is specifically configured to receive the first message from a first node by using a non-access-stratum protocol, where the first node is a core network element, and the second node is a terminal device; or receive the first message from a first node by using a radio resource control protocol, where the first node is an access network device, and the second node is a terminal device; or receive the first message from a first node by using a next-generation application protocol, where the first node is a core network element, and the second node is an access network device; or receive the first message from a first node by using an Xn interface application procedure protocol, where the first node and the second node are different access network devices.

In a possible implementation, the transceiver module is specifically configured to receive the first message by using a blockchain control protocol, where the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

In a possible implementation, the transceiver module is specifically configured to receive the first message from a first node by using a first blockchain control protocol, where the second node is a terminal device, and the first node is a core network element; or the second node receives the first message from a first node by using a second blockchain control protocol, where the second node is a terminal device, the first node is an access network device, and the second blockchain control protocol is different from the first blockchain control protocol.

In a possible implementation, the transceiver module is further configured to send a third message, where the third message is for requesting to set up a blockchain, and the third message carries a blockchain service requirement parameter, or the third message is for de-registering a blockchain capability of a second node, or the third message is for registering a blockchain capability of a second node.

For possible implementations of the communication apparatus in the sixth aspect, refer to the possible implementations of the second aspect.

For technical effect brought by the possible implementations of the sixth aspect, refer to the descriptions of the technical effect of the possible implementations of the second aspect.

According to a seventh aspect, an embodiment of this application provides another communication apparatus. The communication apparatus has a function of implementing behavior in the method embodiment in the third aspect. The communication apparatus may be a network device, or may be a component (for example, a processor, a chip, or a chip system) of the network device, or may be a logical module or software that can implement all or a part of functions of the network device. Alternatively, the communication apparatus may be a terminal device, or may be a component (for example, a processor, a chip, or a chip system) of the terminal device, or may be a logical module or software that can implement all or a part of functions of the terminal device. In this application, the network device may include an access network device (for example, a base station), a core network device, or the like. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a third message. The transceiver module is configured to send the third message, where the third message is for requesting to set up a blockchain, and the third message carries a blockchain service requirement parameter, or the third message is for de-registering a blockchain capability of a second node, or the third message is for registering a blockchain capability of a second node; and receiving a fourth message, where the fourth message is for responding to the third message.

In a possible implementation, the transceiver module is specifically configured to: send the third message to a first node by using a non-access-stratum protocol, where the second node is a terminal device, and the first node is a core network element; or send the third message to a first node by using a radio resource control protocol, where the second node is a terminal device, and the first node is an access network device; or send the third message to a first node by using a next-generation application protocol, where the second node is an access network device, and the first node is an access network device; or send the third message to a first node by using an Xn interface application procedure protocol, where the second node and the first node are different access network devices.

In a possible implementation, the transceiver module is specifically configured to send the third message by using a blockchain control protocol, where the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

In a possible implementation, when a first node is a core network element, the transceiver module is specifically configured to send the third message to the first node by using a first blockchain control protocol; or when a first node is an access network device, the transceiver module is specifically configured to send the third message to the first node by using a second blockchain control protocol, where the second blockchain control protocol is different from the first blockchain control protocol.

For possible implementations of the communication apparatus in the seventh aspect, refer to the possible implementations of the third aspect.

For technical effect brought by the possible implementations of the seventh aspect, refer to the descriptions of the technical effect of the possible implementations of the third aspect.

According to an eighth aspect, an embodiment of this application provides another communication apparatus. The communication apparatus has a function of implementing behavior in the method embodiment in the fourth aspect. The communication apparatus may be a network device, or may be a component (for example, a processor, a chip, or a chip system) of the network device, or may be a logical module or software that can implement all or a part of functions of the network device. Alternatively, the communication apparatus may be a terminal device, or may be a component (for example, a processor, a chip, or a chip system) of the terminal device, or may be a logical module or software that can implement all or a part of functions of the terminal device. In this application, the network device may include an access network device (for example, a base station), a core network device, or the like. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a third message, where the third message is for requesting to set up a blockchain, and the third message carries a blockchain service requirement parameter, or the third message is for de-registering a blockchain capability of a second node, or the third message is for registering a blockchain capability of a second node. The processing module is configured to generate a fourth message. The transceiver module is configured to send the fourth message, where the fourth message is for responding to the third message.

In a possible implementation, the transceiver module is specifically configured to receive the third message by using a blockchain control protocol, where the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

In a possible implementation, when the first node is a core network element, the transceiver module is specifically configured to receive the third message by using a first blockchain control protocol; or when the first node is an access network device, the transceiver module is specifically configured to receive the third message by using a second blockchain control protocol, where the second blockchain control protocol is different from the first blockchain control protocol.

In a possible implementation, the processing module is further configured to: when the first node has a blockchain capability and a blockchain control function is deployed on the first node, parse the third message, where the blockchain control function is a blockchain management and/or configuration function; or when the first node has a blockchain capability and a blockchain control function is not deployed on the first node, the transceiver module is further configured to forward the third message to a third node to which the first node belongs, where the blockchain control function is deployed on the third node; or when the first node does not have a blockchain capability, the transceiver module is further configured to forward the third message to a node on which the blockchain control function is deployed.

For possible implementations of the communication apparatus in the eighth aspect, refer to the possible implementations of the fourth aspect.

For technical effect brought by the possible implementations of the eighth aspect, refer to the descriptions of the technical effect of the possible implementations of the fourth aspect.

According to a ninth aspect, an embodiment of this application provides another communication apparatus. The communication apparatus includes one or more processors, where the one or more processors are configured to process information (including data and/or signaling), so that the method in any one of the first aspect to the fourth aspect is implemented.

Optionally, the communication apparatus further includes a memory, and the memory stores a program or instructions. When the program or the instructions are executed by the processor, the communication apparatus is enabled to perform the method according to the first aspect or the second aspect. For example, the communication apparatus may be a chip, the processor is a processing circuit in the chip, and the memory is a random access memory or a cache in the chip.

In this embodiment of this application, in a process of performing the method, a process of sending information (or a signal) in the method may be understood as a process of outputting the information according to instructions of the processor. When the information is output, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information into the processor. Further, after the transceiver receives the information, other processing may be performed on the information before the information is input into the processor.

Operations such as sending and/or receiving related to the processor may be generally understood as outputting based on instructions of the processor, unless otherwise specified, or if the operations do not conflict with actual functions or internal logic of the operations in the related descriptions.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in the first aspect or any possible implementation of the first aspect.

In a possible implementation, the memory is located outside the communication apparatus. In a possible implementation, the memory is located inside the communication apparatus.

In a possible implementation, the processor and the memory may alternatively be integrated into one device. In other words, the processor and the memory may alternatively be integrated together.

In a possible implementation, the communication apparatus further includes the transceiver. The transceiver is configured to: receive a signal, send a signal, or the like.

According to a tenth aspect, this application provides another communication apparatus. The communication apparatus includes a processing circuit and an interface circuit. The interface circuit is configured to obtain data or output data. The processing circuit is configured to perform the method according to any one of the first aspect to the fourth aspect.

According to an eleventh aspect, this application provides a computer-readable storage medium. The computer-readable storage medium stores a computer program, and the computer program includes program instructions. When the program instructions are executed, a computer is enabled to perform the method according to any one of the first aspect to the fourth aspect.

According to a twelfth aspect, this application provides a computer program product. The computer program product includes a computer program, and the computer program includes program instructions. When the program instructions are executed, a computer is enabled to perform the method according to any one of the first aspect to the fourth aspect.

According to a thirteenth aspect, this application provides a chip, including a communication interface and a processor. The communication interface is configured to receive/send a signal of the chip. The processor is configured to execute computer program instructions, so that a communication apparatus including the chip performs the method in any one of the first aspect to the fourth aspect.

According to a fourteenth aspect, an embodiment of this application provides a communication system, including the communication apparatus according to any one of the fifth aspect or the possible implementations of the fifth aspect, and the communication apparatus according to any one of the sixth aspect or the possible implementations of the sixth aspect.

According to a fifteenth aspect, an embodiment of this application provides another communication system, including the communication apparatus according to any one of the seventh aspect or the possible implementations of the seventh aspect and the communication apparatus according to any one of the eighth aspect or the possible implementations of the eighth aspect.

### BRIEF DESCRIPTION OF DRAWINGS

To describe technical solutions in embodiments of this application or the background more clearly, the following describes accompanying drawings that need to be used in embodiments of this application.
FIG. 1 is a diagram of a network architecture according to an embodiment of this application;
FIG. 2 shows an example of layers and subdomains of a ledger anchor function LAF according to an embodiment of this application;
FIG. 3 shows an example of division of protocol stacks based on functions according to an embodiment of this application;
FIG. 4 shows an example of division of protocol stacks based on node types according to an embodiment of this application;
FIG. 5 shows an example of division of protocol stacks based on message types according to an embodiment of this application;
FIG. 6 shows a blockchain control protocol stack example according to an embodiment of this application;
FIG. 7 shows another blockchain control protocol stack example according to an embodiment of this application;
FIG. 8 shows another blockchain control protocol stack example according to an embodiment of this application;
FIG. 9 shows another blockchain control protocol stack example according to an embodiment of this application;
FIG. 10 shows an example of a state transition diagram of a blockchain capability according to an embodiment of this application;
FIG. 11 is an interaction flowchart of a communication method according to an embodiment of this application;
FIG. 12 is an interaction flowchart of another communication method according to an embodiment of this application;
FIG. 13 is an interaction flowchart of another communication method according to an embodiment of this application;
FIG. 14 is an interaction flowchart of another communication method according to an embodiment of this application;
FIG. 15 is an interaction flowchart of another communication method according to an embodiment of this application;
FIG. 16 is an interaction flowchart of another communication method according to an embodiment of this application;
FIG. 17 is an interaction flowchart of another communication method according to an embodiment of this application;
FIG. 18 is an interaction flowchart of another communication method according to an embodiment of this application;
FIG. 19 is an interaction flowchart of another communication method according to an embodiment of this application;
FIG. 20 is an interaction flowchart of another communication method according to an embodiment of this application;
FIG. 21 is an interaction flowchart of another communication method according to an embodiment of this application;
FIG. 22 is an interaction flowchart of another communication method according to an embodiment of this application;
FIG. 23 is an interaction flowchart of another communication method according to an embodiment of this application;
FIG. 24 is an interaction flowchart of another communication method according to an embodiment of this application;
FIG. 25 is an interaction flowchart of another communication method according to an embodiment of this application;
FIG. 26 is an interaction flowchart of another communication method according to an embodiment of this application;
FIG. 27 is an interaction flowchart of another communication method according to an embodiment of this application;
FIG. 28 is an interaction flowchart of another communication method according to an embodiment of this application;
FIG. 29 is an interaction flowchart of another communication method according to an embodiment of this application;
FIG. 30 is an interaction flowchart of another communication method according to an embodiment of this application;
FIG. 31 is an interaction flowchart of another communication method according to an embodiment of this application;
FIG. 32 is an interaction flowchart of another communication method according to an embodiment of this application;
FIG. 33 is an interaction flowchart of another communication method according to an embodiment of this application;
FIG. 34 is an interaction flowchart of another communication method according to an embodiment of this application;
FIG. 35 is an interaction flowchart of another communication method according to an embodiment of this application;
FIG. 36 is a diagram of a structure of a communication apparatus 3600 according to an embodiment of this application; and
FIG. 37 is a diagram of a structure of another apparatus 370 according to an embodiment of this application.

### DESCRIPTION OF EMBODIMENTS

In this specification, claims, and the accompanying drawings of this application, terms such as "first" and "second" are only intended to distinguish between different objects but do not describe a particular order. It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described may be combined with other embodiments.

Terms used in the following embodiments of this application are merely intended to describe specific embodiments, but are not intended to limit this application. As used in the specification and appended claims of this application, terms "a", "one", "the", "the foregoing", and "this" of singular forms are intended to also include plural forms, unless otherwise clearly specified in the context. It should be further understood that the term "and/or" used in this application indicates and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" usually indicates an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) only based on (or according to) A, and B may alternatively be determined (or generated) based on (or according to) A and/or other information.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that the information C is used to determine the information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source for sending the information and the destination. However, the destination may understand valid information from the source. Similar descriptions in this application may be understood similarly, and details are not described herein. As described in the background, existing blockchain protocols and protocol stacks cannot be simply directly applied to a telecommunication network. Therefore, a solution for applying blockchains to the telecommunication network needs to be studied. The following first describes a communication system to which the technical solutions provided in this application are applicable.

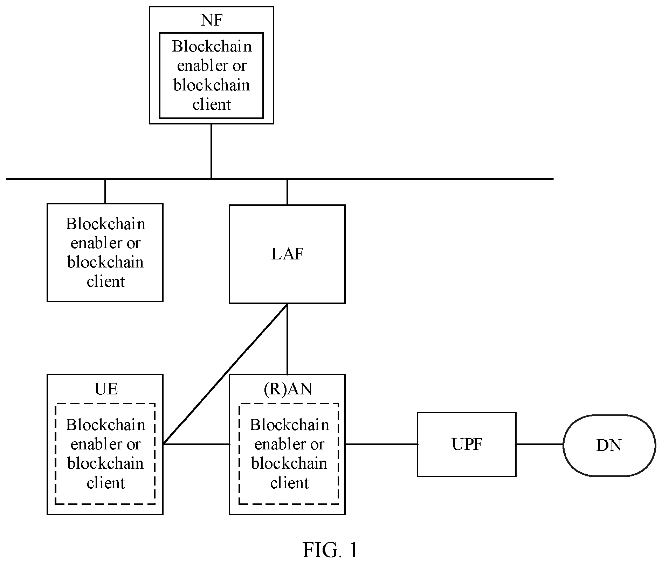

FIG. 1 is a diagram of a network architecture according to an embodiment of this application. As shown in FIG. 1, the network architecture includes one or more ledger anchor function (ledger anchor function, LAF) network elements (only one LAF network element is shown, and is referred to as the LAF for short below), one or more user equipments (user equipments, UEs) (only one UE is shown) on which a blockchain enabler (BC enabler) or a blockchain client (BC client) is deployed, one or more access network devices (only one access network device is shown) on which a blockchain enabler or a blockchain client is deployed, one or more UPFs (only one UPF is shown), and a data network (data network, DN). Optionally, the network architecture further includes a blockchain enabler (BC enabler) or a blockchain client (BC client) that is used as an independent core network function, and/or one or more core network elements on which a blockchain enabler or a blockchain client is deployed. The blockchain enabler (BC enabler) that is used as an independent core network function may provide a blockchain proxy service for another network function (network function, NF) network element. The blockchain client (BC client) that is used as an independent core network function may provide a transaction proposal service for another network function network element. A quantity of various network elements and a quantity of UEs in the network architecture shown in FIG. 1 are not limited. The network architecture shown in FIG. 1 may be an example of a network architecture of a communication system that evolves from a fifth generation (fifth generation, 5G), for example, a sixth generation (sixth generation, 6G), and FIG. 1 shows only a part of network elements in the network architecture. In this specification, the blockchain enabler may be replaced with a blockchain capability. The core network element on which the blockchain enabler is deployed may be referred to as a core network element having (or supporting) a blockchain capability. The UE on which the blockchain enabler is deployed may be referred to as a UE having (or supporting) a blockchain capability. The access network device on which the blockchain enabler is deployed may be referred to as an access network device having (or supporting) a blockchain capability.

The LAF is an anchor for overall management and association of a blockchain (for example, a 6G blockchain), and performs functions such as blockchain management, blockchain capability (or blockchain enabler) registration management, blockchain creation, blockchain capability (or blockchain enabler) enabling, and blockchain access control. The LAF is usually deployed in a core network as a network function, and may also have a layered structure. For example, a sub LAF (sub LAF) is deployed in an access network, and the sub LAF is managed by the LAF. In this specification, the LAF may be a core network element or an access network device. The LAF in the following descriptions indicates a core network element or an access network device on which the LAF is deployed.

A blockchain enabler in a telecommunication network is configured and managed by the LAF. In other words, a node (including the UE, the access network device, and the core network element) on which a blockchain enabler is deployed is configured and managed by the LAF. In other words, a node (including the UE, the access network device, and the core network element) having (or supporting) a blockchain capability is configured and managed by the LAF. In this application, different on-chain node types (that is, types of nodes on the blockchain) may be distinguished based on capabilities of the nodes. A node on which a blockchain enabler is deployed may have one or more of the following functions: transaction proposal, transaction endorsement/execution, smart contract deployment and execution, consensus, transaction/block synchronization, ledger storage, and the like. A blockchain enabler exists on nodes in the telecommunication network, including the UE, the access network device (for example, a base station), and the core network element. In other words, a blockchain enabler may be deployed on a node that needs to have a blockchain capability. It should be noted that the blockchain enabler may not be a physical module (or a hardware entity), and may be loaded (or deployed) on each node in the telecommunication network by using an image code installation package of the blockchain enabler. For example, the core network element on which the blockchain enabler is deployed may also be used as an independent network function, to provide a blockchain proxy capability for another core network element.

The blockchain client is configured and managed by the LAF, to execute functions of generating and transmitting a blockchain transaction. In other words, a node (including the UE, the access network device, and the core network element) on which a blockchain client is deployed is configured and managed by the LAF. A blockchain client exists on nodes in the telecommunication network, including the UE, the access network device (for example, the base station), and the core network element. It should be noted that the blockchain client may not be a physical module (or a hardware entity), and may be loaded (or deployed) on each node in the telecommunication network by using an image code installation package of the blockchain client. For example, the core network element on which the blockchain client is deployed may also be used as an independent network function, to provide a transaction proposal service for another core network element.

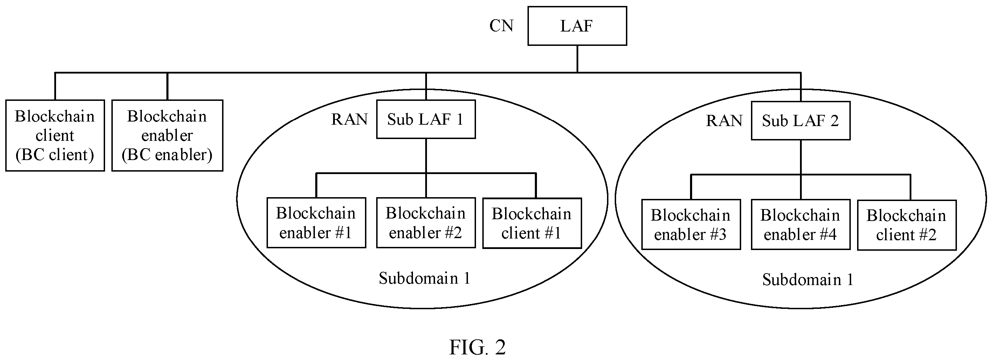

In a possible implementation, a part of the LAF is deployed in the core network, and a part of the LAF is deployed in the access network. The LAF deployed in the access network may be named as a sub LAF (sub LAF), and the LAF deployed in the core network may manage and configure the sub LAF. The LAF may be a core network element in the core network, and the sub LAF may be an access network device in the access network. When the LAF is deployed in the access network, the LAF has a layered feature, that is, the LAF deployed in the core network is at a high layer, and can manage and configure the sub LAF (for example, the sub LAF in the access network) at a low layer. The sub LAF may manage and configure a blockchain enabler and/or a blockchain client of a connected access network node, or may manage and configure a blockchain enabler and/or a blockchain client of a terminal device. In this case, the access network node and the terminal device supervised (or managed) by the sub LAF are referred to as a "subdomain" to which the sub LAF belongs, that is, a subdomain associated with the sub LAF. The subdomain may indicate all nodes (including the terminal device and the access network device) that are managed by the sub LAF and on which a blockchain enabler and/or a blockchain client are/is deployed. One or more nodes (access network devices or terminal devices) on which a blockchain enabler and/or a blockchain client are/is deployed may be disposed under one LAF, or one or more subdomains may be disposed. Alternatively, one or more nodes on which a blockchain enabler and/or a blockchain client are/is deployed and one or more subdomains may be disposed. For example, after the subdomain is disposed under the LAF, the LAF does not directly manage the node on which the blockchain enabler and/or the blockchain client are/is deployed in the subdomain, does not need to sense specific information of the node, and only needs to deliver instructions for the entire subdomain to the sub LAF. This can reduce workloads of the LAF. FIG. 2 shows an example of layers and subdomains of an LAF according to an embodiment of this application. The example shown in FIG. 2 may be a part (not shown) of FIG. 1. As shown in FIG. 2, one node on which a blockchain enabler is deployed, one node on which a blockchain client is deployed, a sub LAF 1 (that is, a sub LAF 1 in FIG. 2), and a sub LAF 2 (that is, a sub LAF 2 in FIG. 2) are disposed under an LAF in a core network (core network, CN). The sub LAF 1 manages a subdomain 1, and the subdomain 1 includes a plurality of nodes (only three nodes are shown, and a blockchain enabler #1, a blockchain enabler #2, and a blockchain client #1 are respectively deployed on the three nodes). The sub LAF 2 manages a subdomain 2, and the subdomain 2 includes a plurality of nodes (only three nodes are shown, and a blockchain enabler #3, a blockchain enabler #4, and a blockchain client #2 are respectively deployed on the three nodes). The node in the subdomain may be an access network device, or may be a terminal device. For example, one subdomain includes a plurality of access network devices and a plurality of terminal devices that are managed by one sub LAF, and the plurality of terminal devices access the core network through the access network devices in the subdomain. For another example, one subdomain includes a plurality of integrated access and backhaul (integrated access & backhaul, IAB) nodes and a plurality of terminal devices that are managed by one sub LAF, and the plurality of terminal devices access the core network through the IAB nodes in the subdomain. Possible cases of the subdomain: In a super cell, one access network device (for example, a base station) is deployed as an LAF, and manages a plurality of access network devices. In a possible implementation, there may be a layered architecture in an access network, that is, there are a plurality of layers of LAFs in the access network, and an LAF at a higher layer may manage and configure an LAF at a lower layer.

In embodiments of this application, the terminal device (terminal equipment) may also be referred to as a user equipment (user equipment, UE), an access terminal, a subscriber unit (subscriber unit), a user station, a mobile station, a mobile station (mobile station, MS), a remote station, a remote terminal, a mobile device, a user terminal, a terminal (terminal), a wireless communication device, a user agent, or a user apparatus.

The terminal device may be a device with a wireless communication function, for example, a handheld device or a vehicle-mounted device with a wireless connection function. Currently, some examples of the terminal device are: a mobile phone (mobile phone), a satellite mobile terminal, a cellular phone (cellular phone), a smartphone (smartphone), a tablet computer, a notebook computer, a palmtop computer, a mobile internet device (mobile internet device, MID), a wearable device (for example, a smartwatch, a smart band, a pedometer, or smart glasses), a vehicle-mounted device (for example, a car, a bicycle, an electric vehicle, an airplane, a ship, a train, or a high-speed railway), a satellite terminal, a virtual reality (virtual reality, VR) device, an augmented reality (augmented reality, AR) device, an intelligent point of sale (point of sale, POS) machine, customer-premises equipment (customer-premises equipment, CPE), a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home) (for example, a refrigerator, a television, an air conditioner, or an electricity meter), an intelligent robot, a mechanical arm, a cellular phone, a cordless phone, a session initiation protocol (session initiation protocol, SIP) phone, a wireless local loop (wireless local loop, WLL) station, a personal digital assistant (personal digital assistant, PDA), a handheld device, a compute device, or another processing device connected to a wireless modem that has a wireless communication function, a flight device (for example, an intelligent robot, a hot air balloon, a drone, or an airplane), a terminal device in a 5G network, or a terminal device in a future evolved public land mobile network (public land mobile network, PLMN). This is not limited in the embodiments of this application. As an example rather than a limitation, in this embodiment of this application, the terminal device may alternatively be a mobile terminal (mobile termination, MT) in an IAB node. The IAB node may be considered by a parent node of the IAB node as a terminal device. In this case, the IAB node plays a role of an MT.

In embodiments of this application, an apparatus configured to implement a function of the terminal device may be a terminal device, or may be an apparatus, for example, a chip system, that can support the terminal device in implementing the function. The apparatus may be loaded in the terminal device, or may be used together with the terminal device. In embodiments of this application, the chip system may include a chip, or may include a chip and another discrete component. In this embodiment of this application, an example in which the apparatus configured to implement the function of the terminal device is the terminal device is merely used for description, and does not constitute a limitation on the solutions in embodiments of this application.

The access network device in embodiments of this application may be a device configured to communicate with the terminal device, and the access network device may also be referred to as a network device or a radio access network device. The access network device in embodiments of this application may indicate a radio access network (radio access network, RAN) node (or device) that connects the terminal device to a wireless network.

In a possible scenario, the access network device may be a base station (base station), an evolved NodeB (evolved NodeB, eNodeB), a transmitting and receiving point (transmitting and receiving point, TRP), a transmitting point (transmitting point, TP), a next-generation NodeB (next-generation NodeB, gNB), a next-generation base station in a sixth generation (6th generation, 6G) mobile communication system, a base station in a future mobile communication system, a satellite, an access point (access point, AP) in a Wi-Fi system, an integrated access and backhaul (integrated access and backhaul, IAB) node, or an access network device in a mobile switching center non-terrestrial network (non-terrestrial network, NTN) communication system, that is, may be deployed on a high-altitude platform or a satellite. The access network device may be a macro base station, a micro base station, an indoor base station, a relay node, a donor node, or a radio controller in a cloud radio access network (cloud radio access network, CRAN) scenario. The access network device may alternatively be a device with a base station function in device to device (device to device, D2D) communication, internet of vehicles communication, uncrewed aerial vehicle communication, or machine communication. Optionally, the access network device may alternatively be a server, a wearable device, a vehicle, a vehicle-mounted device, or the like. For example, an access network device in a vehicle to everything (vehicle to everything, V2X) technology may be a roadside unit (roadside unit, RSU). The IAB node integrates a mobile terminal (mobile termination, MT) part and a distributed unit (distributed unit, DU) part. The IAB node may be considered by a parent node of the IAB node as a terminal. In this case, the IAB node plays a role of an MT. The IAB node may be considered by a child node (the child node may be a terminal or an MT of another IAB node) as an access network device. An IAB node may set up a backhaul connection with at least one parent node of the IAB node by using an MT part. A DU part of an IAB node may provide an access service for a terminal or an MT part of another IAB node.

In another possible scenario, a plurality of access network devices coordinate to assist a terminal in implementing radio access, and different access network devices separately implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified as an access network device in an access network RAN, or the CU may be classified as an access network device in a core network CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module. A specific technology and a specific device form that are used by the access network device are not limited in embodiments of this application.

To introduce a blockchain technology into the telecommunication network, this application defines new blockchain functions, that is, blockchain functions are classified into a blockchain management function, a blockchain control function, a dynamic blockchain connection function, a blockchain data function, and the like, and provides possible protocol stack designs for four blockchain functions applicable to the telecommunication network.

An example of functions implemented by the blockchain management function, the blockchain control function, the dynamic blockchain connection function, and the blockchain data function is as follows.

The blockchain management function means performing deployment and management on a blockchain capability of a node, including loading/deleting a blockchain capability (that is, a blockchain enabler and/or a blockchain client), and performing enabling, updating, locking, disabling, or the like on a blockchain capability of a node.

The blockchain control function means deploying and configuring a blockchain, including transmitting a chain setup requirement (that is, transmitting a blockchain setup requirement), setting up/updating/removing a blockchain, and configuring a blockchain connection/node attribute. The blockchain control function further includes transmitting some key parameters, for example, including blockchain information and blockchain capability information requesting/subscription/notification.

The dynamic blockchain connection function means setting up a connection between blockchain nodes, dynamically configuring a blockchain connection by a node, including joining/exiting a chain by the node, checking a connection by a node, and electing a node. Dynamically configuring a blockchain connection by a node may indicate dynamically configuring the blockchain connection of the node, including joining/exiting a chain by the node. A node that is to join a blockchain may send its own information to a blockchain node (an internet protocol (internet protocol, IP) address of the blockchain node may be obtained by using an existing communication network control plane protocol) by using a node discovery procedure of the dynamic blockchain connection function, to join the blockchain. For example, a base station sets up a connection with another base station by using an XnAP protocol. In this case, to join a blockchain to which the another base station belongs, the base station expresses this intention by using a node discovery procedure. The another base station may verify whether the two base stations belong to a same operator. If the two base stations belong to the same operator, the another base station updates a blockchain profile (profile), adds information about the former base station to the block profile, sends an updated blockchain profile to the former base station, and broadcasts the updated blockchain profile to other blockchain nodes.

The blockchain data function means transmitting blockchain data between blockchain nodes, including requesting/sending/responding to blockchain data, inquiring blockchain data, and the like.

It should be noted that functions implemented by the blockchain management function, the blockchain control function, the dynamic blockchain connection function, and the blockchain data function are not limited in this application. A part of functions implemented by the blockchain control function may be implemented by the blockchain management function. For example, the blockchain management function implements blockchain setup/updating/removal. In this specification, the blockchain may be referred to as a chain for short. For example, a chain name below refers to a name of a blockchain.

The following uses a node in a telecommunication network as an example to describe a relationship between the four functions. First, a node deploys/enables a blockchain capability through the blockchain management function. After deploying/enabling the blockchain capability, the node may be referred to as a blockchain node. The LAF performs the blockchain control function to set up a blockchain. Only a node having the blockchain capability can join the chain. The LAF may further configure, through the blockchain control function, the blockchain that has been set up, or configure a node joining the blockchain. The node may dynamically exit or join a blockchain through the dynamic blockchain connection function. Nodes participating in the blockchain synchronize data through the blockchain data function.

Different blockchain functions may correspond to different third generation partnership project (third generation partnership project, 3GPP) protocol stacks ("correspond" means that a blockchain function is placed on a plane, that is, the plane supports the blockchain function). In this application, three different schemes are designed to divide blockchain protocol planes.

Scheme 1: The blockchain management function, the blockchain control function, the dynamic blockchain connection function, and the blockchain data function respectively correspond to a 3GPP management plane (management plane, MP), a 3GPP control plane (control plane, CP), a plane corresponding to the dynamic blockchain connection function, and a 3GPP user plane (user plane, UP) (or referred to as a data plane).

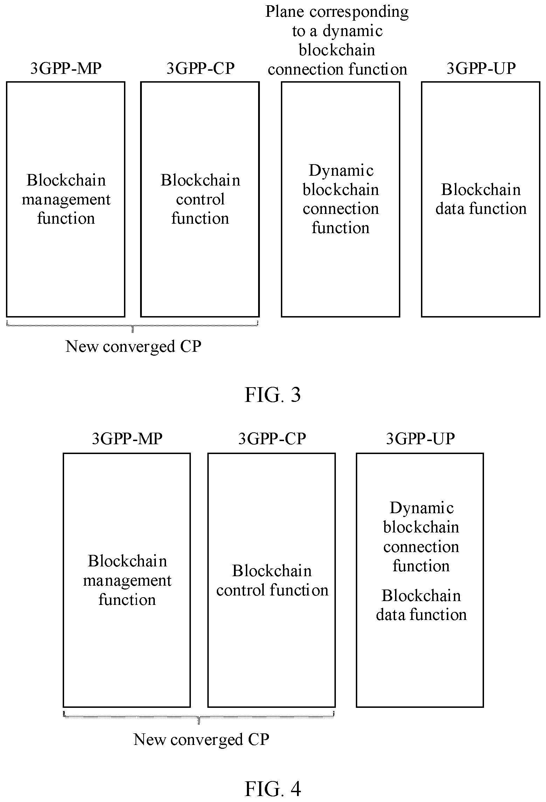

FIG. 3 shows an example of division of protocol stacks based on functions according to an embodiment of this application. As shown in FIG. 3, a blockchain management function corresponds to a 3GPP-MP, a blockchain control function corresponds to a 3GPP-CP, a dynamic blockchain connection function corresponds to a plane, and a blockchain data function corresponds to a 3GPP-UP. The plane corresponding to the dynamic blockchain connection function indicates a plane corresponding to the dynamic blockchain connection function in the 6G network or the future communication network, and there is no similar plane in the 5G communication network. A new converged CP in FIG. 3 is specific to a future possible case in which the management plane and the control plane are converged. In other words, if the management plane and the control plane are converged, the plane obtained by converging the management plane and the control plane supports the blockchain management function and the blockchain control function.

Scheme 1 facilitates protocol stack deployment. To be specific, an LAF deploys a management plane protocol (supporting the blockchain management function) and a control plane protocol (supporting the blockchain control function), and a node on which a blockchain enabler and/or a blockchain client are/is deployed deploys protocols of all the four planes. In Scheme 1, different planes are configured for different blockchain functions, which is consistent with a protocol plane division principle, and division of the protocol plane functions is clearer.

Scheme 2: The blockchain management function corresponds to a 3GPP management plane, the blockchain control function corresponds to a 3GPP control plane, and the dynamic blockchain connection function and the blockchain data function correspond to a 3GPP user plane. In Scheme 2, the three-plane design of 3GPP is used, and the dynamic blockchain connection function and the blockchain data function are combined into one plane.

FIG. 4 shows an example of division of protocol stacks based on node types according to an embodiment of this application. As shown in FIG. 4, in Scheme 2, a blockchain management function and a blockchain control function are separately independent planes, that is, the blockchain management function corresponds to a 3GPP management plane, the blockchain control function corresponds to a 3GPP control plane, and a dynamic blockchain connection function and a blockchain data function both correspond to a user plane, that is, a protocol stack of the dynamic blockchain connection function and a protocol stack of the blockchain data function are both placed on the user plane. Both the blockchain management function and the blockchain control function are related to an LAF, and the dynamic blockchain connection function and the blockchain data function are related only to a node on which a blockchain enabler and/or a blockchain client are/is deployed. Therefore, in this scheme, the LAF needs to deploy only the blockchain functions related to the LAF, that is, the blockchain management function and the blockchain control function. In Scheme 2, a same protocol is used to implement the dynamic blockchain connection function and the blockchain data function. This scheme facilitates protocol stack deployment. Each node needs to deploy only a protocol stack related to the node. For example, the LAF deploys only the protocol stack of the blockchain management function and the protocol stack of the blockchain control function, and the node on which the blockchain enabler and/or the blockchain client are/is deployed deploys all the four-plane protocols.

Scheme 3: The blockchain management function corresponds to a 3GPP management plane, the blockchain control function and the dynamic blockchain connection function correspond to a 3GPP control plane, and the blockchain data function corresponds to a 3GPP user plane. In Scheme 3, protocol stacks are divided based on message types, and the blockchain control function and the dynamic blockchain connection function are combined into one plane, that is, a protocol stack of the blockchain control function and a protocol stack of the dynamic blockchain connection function are placed on the same plane, and the blockchain data function is independent, so that a control plane interaction message does not include blockchain data, and a service plane interaction message is blockchain data only.

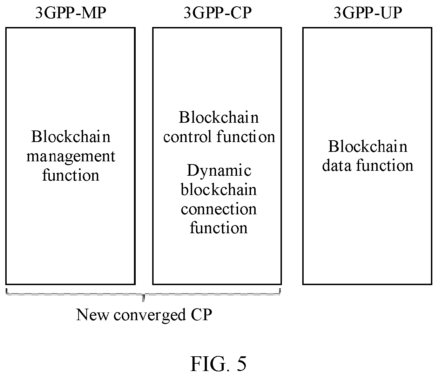

FIG. 5 shows an example of division of protocol stacks based on message types according to an embodiment of this application. As shown in FIG. 5, a blockchain management function corresponds to a 3GPP management plane, a blockchain control function and a dynamic blockchain connection function correspond to a 3GPP control plane, and a blockchain data function corresponds to a 3GPP user plane.

The foregoing three protocol stack division schemes are merely examples. Protocol stacks of blockchain functions may be divided in another manner. This is not limited in this application.

In a possible implementation, if a trusted plane (or "security plane", which has a same meaning and refers to a protocol plane on which a security function is independently designed) is set in the telecommunication network, the four types of blockchain functions correspond to the trusted plane. If the trusted plane is further divided into a trusted management plane, a trusted control plane, and a trusted service plane (respectively performing management, configuration, and data transmission of the security function), the blockchain functions may also correspond to the trusted management plane (corresponding to the management plane in FIG. 3 to FIG. 5), the trusted control plane (corresponding to the control plane in FIG. 3 to FIG. 5), and the trusted service plane (corresponding to the user plane in FIG. 3 to FIG. 5) in the manner in FIG. 3 to FIG. 5.

The following describes examples of protocol stacks (including a trustworthiness blockchain control protocol (trustworthiness blockchain control protocol, TBCP)) deployed on different types of nodes in the telecommunication network. The TBCP may be a protocol that supports the blockchain control function. In a possible implementation, the 3GPP management plane function may be implemented by using control signaling, and the TBCP also supports the blockchain management function.

Example 1: TBCPs are deployed on both a node (including a UE and an access network device) on which a blockchain enabler and/or a blockchain client are/is deployed and an LAF. The UE on which the blockchain enabler and/or the blockchain client are/is deployed communicates with the LAF in a core network by using the TBCPs; and the access network device on which the blockchain enabler and/or the blockchain client are/is deployed communicates with the LAF in the core network by using the TBCPs. The TBCP deployed on each node may be deployed above each protocol that implements connection setup, for example, a PDCP, an SCTP, a transmission control protocol (transmission control protocol, TCP), a user datagram protocol (user datagram protocol, UDP), and the like. In a possible implementation, the TBCP of the UE is deployed at a highest layer of a protocol stack, the TBCP of the access network device is deployed at a highest layer of a protocol stack, and the TBCP of the LAF is deployed at a highest layer of a protocol stack.

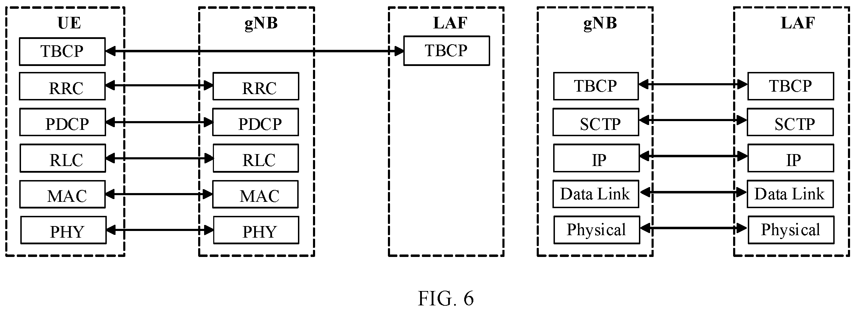

As mentioned in the foregoing descriptions of the subdomain, the LAF may be deployed in the access network. In an evolution process from 5G to 6G, an LAF, a blockchain enabler, and/or a blockchain client may not be introduced into a telecommunication network in one step, and the LAF may be first introduced only into a core network. In a possible implementation, the access network may have no LAF, that is, the telecommunication network has no sub LAF. FIG. 6 shows a blockchain control protocol stack example according to an embodiment of this application. As shown in FIG. 6, TBCPs are deployed on both a node (including a UE and an access network device) on which a blockchain enabler and/or a blockchain client are/is deployed and an LAF, and the TBCP protocol is at a highest layer of a protocol stack. For descriptions of protocols, other than the TBCP, deployed on nodes in FIG. 6, for example, a radio resource control (radio resource control, RRC) protocol, a packet data convergence protocol (packet data convergence protocol, PDCP), a radio link control (radio link control, RLC) protocol, a media access control (media access control, MAC) protocol, a service data adaptation protocol (service data adaptation protocol, SDAP), a physical layer (physical layer, PHY) protocol, a stream control transport protocol (stream control transport protocol, SCTP), an internet protocol (internet protocol), a data link (data link) protocol, and a physical layer (physical) protocol, refer to a 3GPP standard or a future 3GPP standard. Details are not described herein. In this application, an existing 5G protocol is still used as a protocol at a lower layer of the TBCP. If a protocol is added/deleted/replaced in 6G in the future, a new protocol is used in this application. In other words, regardless of how the protocol at the lower layer evolves, the TBCP remains in support of the blockchain control function and is at the higher layer. A protocol stack below the TBCP in protocol stacks shown in FIG. 6 is not limited in this application. FIG. 6 is merely an example.

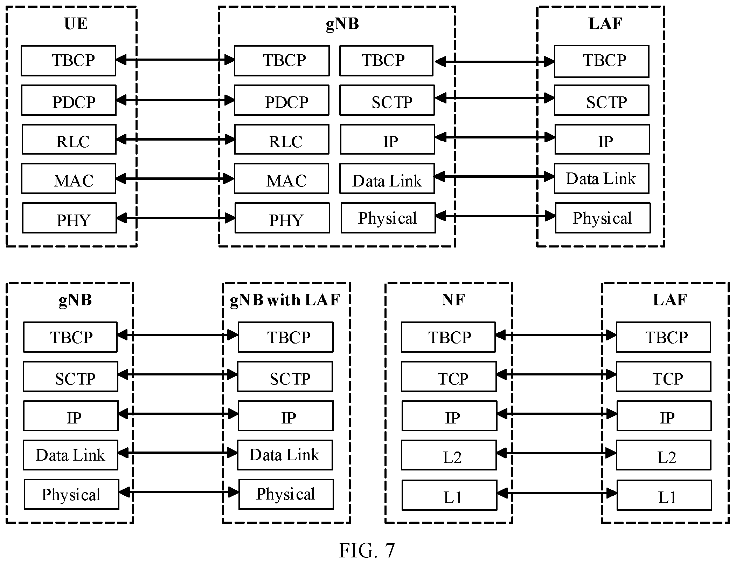

Example 2: TBCPs are deployed on both a node (including a UE and an access network device) on which a blockchain enabler and/or a blockchain client are/is deployed and an LAF. The UE on which the blockchain enabler and/or the blockchain client are deployed, the access network device on which the blockchain enabler and/or the blockchain client are deployed, and the LAF may use the TBCPs at a same layer. There is an LAF in an access network. FIG. 7 shows another blockchain control protocol stack example according to an embodiment of this application. As shown in FIG. 7, a UE communicates, by using a TBCP, with an access network device (for example, a gNB) on which a sub LAF is deployed, the access network device communicates with an LAF in a core network by using a TBCP, and the UE communicates with the LAF in the core network through the access network device by forwarding TBCP-related control signaling (or TBCP signaling). The TBCPs deployed on the nodes may be deployed above a protocol for implementing connection setup, for example, a PDCP, an SCTP, a TCP, or a UDP. Communication between an access network device on which a blockchain enabler and/or a blockchain client are/is deployed and an access network device on which a sub LAF is deployed, and between an NF on which a blockchain enabler and/or a blockchain client are/is deployed and an LAF is implemented by using TBCPs. In a possible implementation, the TBCP of the UE is deployed at a highest layer of a protocol stack, the TBCP of the access network device is deployed at a highest layer of a protocol stack, the TBCP of the NF is deployed at a highest layer of a protocol stack, and the TBCP of the LAF is deployed at a highest layer of a protocol stack. For descriptions of protocols, other than the TBCP, deployed on the nodes in FIG. 7, refer to a 3GPP standard or a future 3GPP standard. Details are not described herein again. In this application, an existing 5G protocol is still used as a protocol at a lower layer of the TBCP. If a protocol is added/deleted/replaced in 6G in the future, a new protocol is used in this application. In other words, regardless of how the protocol at the lower layer evolves, the TBCP remains in support of the blockchain control function and is at the higher layer.

In a possible implementation, when protocol stacks deployed on network elements in a telecommunication network are shown in FIG. 7, a blockchain enabler and/or a blockchain client of a UE select an LAF following a blockchain enabler and/or a blockchain client of an access network device, that is, the UE does not sense whether the access network device has an LAF, and the blockchain enabler and/or the blockchain client of the UE send a message to the LAF, regardless of whether the LAF is in an access network or a core network. A manner of processing TBCP signaling (that is, signaling generated by using a TBCP) by the access network device is as follows:

The access network device may parse the TBCP signaling, that is, the blockchain enabler and/or the blockchain client are/is deployed on the access network device, the access network device supports a blockchain function, a blockchain protocol is deployed on the access network device, and the access network device processes the received TBCP signaling in the following manner:

If the LAF is deployed on the access network device, the access network device may unpack the received TBCP signaling, that is, parse the TBCP signaling.

If no LAF is not deployed on the access network device, the access network device may send the received TBCP signaling to an LAF to which the blockchain enabler and/or the blockchain client of the access network device belong. The LAF to which the blockchain enabler and/or the blockchain client of the access network device belong may be a sub LAF of another RAN node, or may be an LAF in the core network.

If the access network device cannot parse the TBCP signaling, that is, no blockchain enabler and/or blockchain client are/is deployed on the access network device, the access network device forwards the received TBCP signaling to the LAF in the core network.

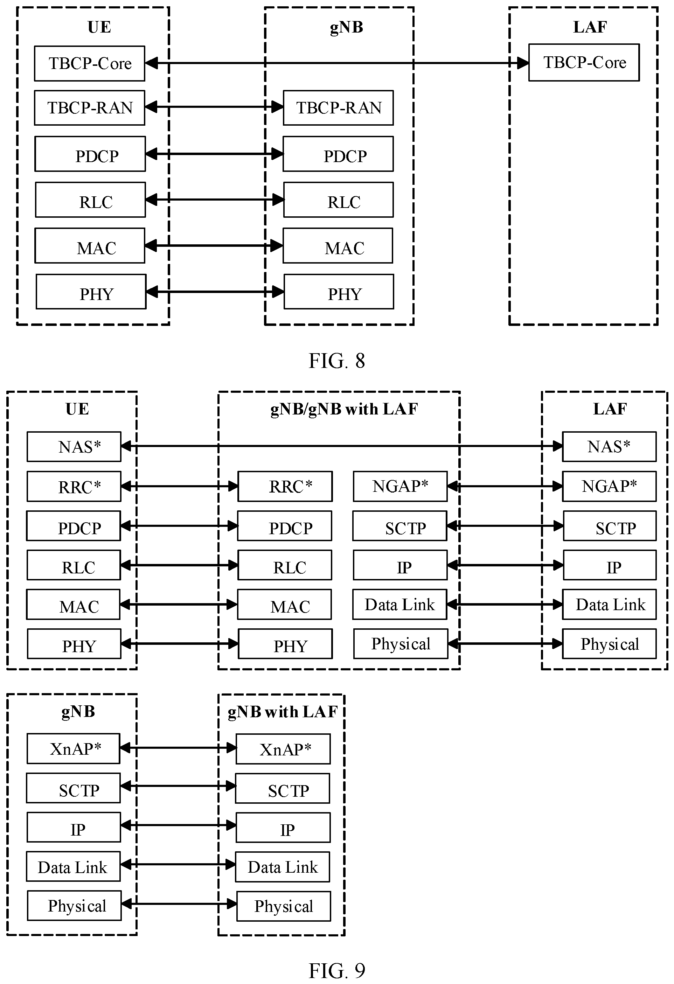

Example 3: Two layers of blockchain protocol stacks, that is, a TBCP-core (core) and a TBCP-radio access network (RAN), are deployed on a UE, a TBCP-RAN is deployed on an access network device, and a TBCP-core is deployed on an LAF. FIG. 8 shows another blockchain control protocol stack example according to an embodiment of this application. As shown in FIG. 8, a UE communicates with an access network device by using a TBCP-RAN protocol, and the UE communicates with an LAF in a core network by using a TBCP-core protocol. There may be a sub LAF in an access network. The access network device may distinguish, based on different protocol types, between unpacking a message locally and sending the message to the core network.

In a possible implementation, when protocol stacks deployed on network elements in a telecommunication network are shown in FIG. 8, a blockchain enabler and/or a blockchain client in a UE may select an LAF in the following manner.

The UE selects, by itself, an LAF in an access network or an LAF in a core network for communication with the LAF by generating signaling of different protocol types.

After the UE accesses the network, the LAF in the core network allocates a specific LAF to the UE. If the sub LAF in the access network is allocated, the UE subsequently communicates with the sub LAF by using the TBCP-RAN protocol. If the LAF in the core network is allocated, the UE subsequently communicates with the LAF in the core network by using the TBCP-core.

In Example 1, Example 2, and Example 3, a new protocol (that is, the TCBP) is used to configure an independent protocol for a blockchain-related function. The protocol may be downloaded/enabled/disabled/deleted together with the blockchain enabler and/or the blockchain client, thereby helping independent configuration of the blockchain capability.

Example 4: An existing 5G protocol layer is reused to implement a blockchain function. FIG. 9 shows another blockchain control protocol stack example according to an embodiment of this application. As shown in FIG. 9, blockchain-related signaling is transmitted between a UE and an LAF in a core network by using a non-access-stratum (non-access-stratum, NAS) protocol, where the NAS adds a blockchain control function (and possibly a blockchain management function); blockchain-related signaling is transmitted between the UE and an access network device by using an RRC protocol, where the RRC adds a blockchain control function (and possibly a blockchain management function); blockchain-related signaling may be transmitted between the access network device and the LAF in the core network by reusing an NG interface and using a next-generation application protocol (next-generation application protocol, NGAP), where the NGAP adds a blockchain control function (and possibly a blockchain management function); or blockchain-related signaling is transmitted by using a new interface defined between the access network device and the LAF; blockchain-related signaling may be transmitted between access network devices by reusing an Xn interface and using an Xn application protocol (Xn application protocol, XnAP), where the XnAP adds a blockchain control function (and possibly a blockchain management function); or blockchain-related signaling is transmitted by using a new interface defined between access network devices; or blockchain-related signaling is transmitted between NFs in the core network by reusing a service-based interface (service-based interface, SBI). Because existing protocols are modified, NAS*/RRC*/NGAP*/XnAP* in FIG. 9 represents modified NAS/RRC/NGAP/XnAP.

In Example 4, the NAS protocol/RRC protocol/NGAP/XnAP is reused, so that a blockchain function can be introduced into the telecommunication network with a small change to the telecommunication network.

The foregoing protocols and protocol stack schemes of the blockchain control function helps introduce the blockchain technology into the telecommunication network. In this application, a new architecture for introducing a blockchain into a telecommunication network is designed, and a new blockchain function is defined. The blockchain technology is not simply combined with the telecommunication network.

A main idea of the technical solutions of this application is that an LAF is used as an anchor for overall management and association of a blockchain, to perform functions such as blockchain management, blockchain capability registration management, blockchain creation, blockchain capability enabling, and blockchain access control, which is consistent with a characteristic that a protocol of a telecommunication network is divided into a management plane, a control plane, and a user plane.

The following describes the blockchain management function and the blockchain control function described above.

The blockchain management function may indicate deployment and management of a blockchain capability of a node, and is specifically classified into two types: capability deployment and capability management.

The capability deployment may include blockchain capability loading and blockchain capability deletion. Blockchain capability loading may be adding a blockchain capability to a node. Blockchain capability deletion may mean removing (or deleting) an existing blockchain capability of a node.

Capability management may include blockchain capability enabling, blockchain capability updating, blockchain capability locking/unlocking, and blockchain capability disabling. Blockchain capability enabling may be enabling an existing blockchain enabler or blockchain client of a node. Blockchain capability updating may be setting new blockchain capability information for a node. Blockchain capability locking may be setting a blockchain capability of a node to being not allowed to be updated (for example, the blockchain capability is being invoked or updated). Blockchain capability unlocking may be setting a blockchain capability of a node to being allowed to be updated and recovering from a locked state. Blockchain capability disabling may be setting a blockchain capability of a node to being not allowed to be invoked or updated.

To implement on-demand orchestration and flexible composition of a blockchain capability, a node may obtain the blockchain capability in two manners. If the node initially does not have a blockchain function (or does not have the blockchain capability), an LAF may enable the node to obtain the blockchain capability by loading the function. Alternatively, if the blockchain function is pre-loaded on the node, the LAF may configure the blockchain capability of the node through enabling for subsequent use.

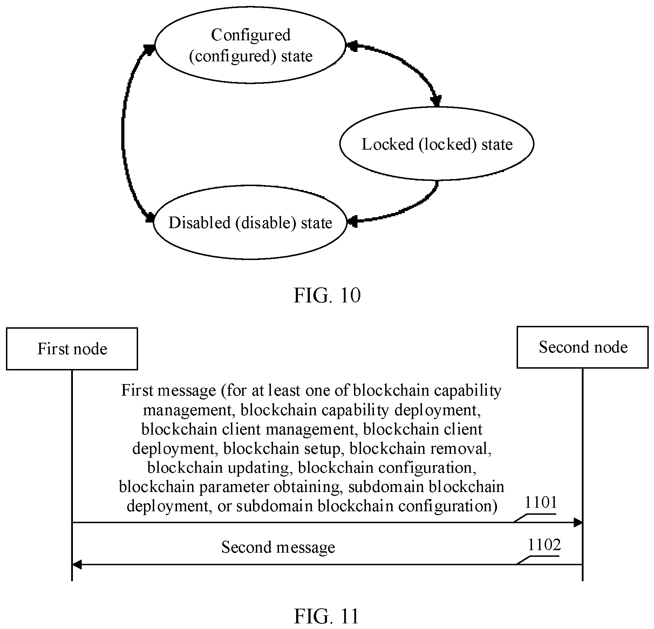

Blockchain capability locking may indicate that a blockchain capability cannot be updated. Blockchain capability disabling may indicate that a blockchain capability cannot be updated or invoked. If a state is set as a parameter of a blockchain capability of a node, state transition is shown in FIG. 10. FIG. 10 shows an example of a state transition diagram of a blockchain capability according to an embodiment of this application. As shown in FIG. 10, after the blockchain capability of a node is loaded/enabled, the node enters a configured (configured) state, indicating that the blockchain capability of the node can be invoked/updated at any time. After the blockchain capability of the node is locked, the blockchain capability of the node enters a locked (locked) state. In this case, an unlocking operation may be performed to restore a blockchain function from the locked state to the configured state, or a disabling operation may be performed to enable the blockchain to enter a disabled (disable) state. After the blockchain capability of the node is disabled, the blockchain capability of the node enters a disabled state (which may be referred to as an inactive state). In this case, the blockchain capability of the node can be invoked/updated only after being re-enabled.

The blockchain management function may provide the following instruction sets:
(Sub) BC enabler load request/response: (subdomain) BC capability load request/response;
(Sub) BC client load request/response: (subdomain) BC client load request/response;
(Sub) BC enabler delete request/response: (subdomain) BC capability delete request/response;
(Sub) BC enabler enable request/response: (subdomain) BC capability enable request/response;
(Sub) BC enabler update request/response: (subdomain) BC capability update request/response;
(Sub) BC client update request/response: (subdomain) BC client update request/response;
(Sub) BC enabler lock request/response: (subdomain) BC capability lock request/response; and
(Sub) BC enabler disable request/response: (subdomain) BC capability disable request/response.

The instruction set is merely an example, and the blockchain management function may further provide another instruction. This is not limited herein. The following describes information carried in an instruction that may be provided by the blockchain management function.

The BC capability load request (BC enabler load request) may carry information used by a node to load a blockchain enabler (BC enabler), that is, information used by the node to deploy a blockchain capability; and the BC capability load response (BC enabler load response) may carry a "success/failure" parameter. Success (success) indicates that the node successfully loads the blockchain enabler, and failure (failure) indicates that the node does not successfully load the blockchain enabler, that is, the node fails to load the blockchain enabler. In a possible implementation, the BC capability load request (BC enabler load request) may further carry information used by a node to load a blockchain client (BC client), that is, information used by the node to deploy the blockchain client; and the BC capability load response (BC enabler load response) may carry a "success/failure" parameter. Success (success) indicates that the node successfully loads the blockchain client, and failure (failure) indicates that the node does not successfully load the blockchain client, that is, the node fails to load the blockchain client. For example, the blockchain enabler and the blockchain client may be loaded and deployed in a same manner, that is, both the blockchain enabler and the blockchain client are deployed by using a BC capability load request (BC enabler load request).

The subdomain BC capability load request (Sub BC enabler load request) may carry information used by a node in a subdomain to load a blockchain enabler (sub BC enabler); and the subdomain BC capability load response (Sub BC enabler load response) may carry a "success/failure" parameter. Success (success) indicates that each node in the subdomain successfully loads the blockchain enabler, and failure (failure) indicates that at least one node in the subdomain does not successfully load the blockchain enabler. In a possible implementation, the subdomain BC capability load request (Sub BC enabler load request) may further carry information used by a node in a subdomain to load a blockchain client (BC client); and the subdomain BC capability load response (Sub BC enabler load response) may carry a "success/failure" parameter. Success (success) indicates that each node in the subdomain successfully loads the blockchain client, and failure (failure) indicates that at least one node in the subdomain does not successfully load the blockchain client.

The BC client load request/response (BC client load request/response) may carry information used by a node to load a blockchain client (BC client), that is, information used by the node to deploy the blockchain client; and the BC client load response (BC client load response) may carry a "success/failure" parameter. Success (success) indicates that the node successfully loads the blockchain client, and failure (failure) indicates that the node does not successfully load the blockchain client, that is, the node fails to load the blockchain client.

The subdomain BC client load request/response (Sub BC client load request/response) may carry information used by a node in a subdomain to load a blockchain client (BC client); and the subdomain BC client load response (Sub BC client load response) may carry a "success/failure" parameter. Success (success) indicates that each node in the subdomain successfully loads the blockchain client, and failure (failure) indicates that at least one node in the subdomain does not successfully load the blockchain client.

The BC capability delete request (BC enabler delete request) may carry information indicating a specific node to delete a blockchain capability, and the BC capability delete response (BC enabler delete response) may carry a "success/failure" parameter. Success (success) indicates that the node successfully deletes the blockchain capability, and failure (failure) indicates that the node does not successfully delete the blockchain capability.

The subdomain BC capability delete request (Sub BC enabler delete request) may carry information indicating a sub LAF to delete a blockchain capability of a node in a subdomain associated with the sub LAF; and the subdomain BC capability delete response (Sub BC enabler delete response) may carry a "success/failure" parameter. Success (success) indicates that the sub LAF successfully deletes the blockchain capability of the node in the subdomain associated with the sub LAF, and failure (failure) indicates that the sub LAF does not successfully delete the blockchain capability of the node in the subdomain associated with the sub LAF.

The BC capability enable request (BC enabler enable request) may carry information indicating a node to enable a blockchain capability, and the BC capability enable response (BC enabler enable response) may carry a "success/failure" parameter. Success (success) indicates that the node successfully enables the blockchain capability, and failure (failure) indicates that the node does not successfully enable the blockchain capability.

The subdomain BC capability enable request (Sub BC enabler enable request) may carry information indicating to enable a blockchain capability of a node in a subdomain (that is, a sub BC enabler profile); and the subdomain BC capability enable response (Sub BC enabler enable response) may carry a "success/failure" parameter. Success (success) indicates that the node in the subdomain successfully enables the blockchain capability, and failure (failure) indicates that the node in the subdomain does not successfully enable the blockchain capability.

The BC capability update request (BC enabler update request) may carry a blockchain enabler profile (that is, a BC enabler profile) or a blockchain enabler update profile (that is, an updated part of a blockchain enabler profile); and the BC capability update response (BC enabler update response) may carry a "success/failure" parameter. Success (success) indicates that a blockchain enabler is successfully updated, that is, a blockchain capability of a node is successfully updated; and failure (failure) indicates that the blockchain enabler is not successfully updated. The blockchain enabler profile (that is, the BC enabler profile) may indicate an attribute of the blockchain node, and may include a capability of the blockchain node and a blockchain capability of the blockchain node. In a possible implementation, the BC capability update request (BC enabler update request) may carry a blockchain client profile (that is, a BC client profile) or an update profile of a blockchain client (that is, an updated part of a blockchain client profile); and the BC capability update response (BC enabler update response) may carry a "success/failure" parameter. Success (success) indicates that the blockchain client is successfully updated, that is, a blockchain capability of a node is successfully updated; and failure (failure) indicates that the blockchain client is not successfully updated.

The BC client update request/response (BC client update request/response) may carry a blockchain client profile (that is, a BC client profile) or a blockchain client update profile (that is, an updated part of a blockchain client profile); and the BC capability update response (BC enabler update response) may carry a "success/failure" parameter. Success (success) indicates that the blockchain client is successfully updated, that is, a blockchain capability of a node is successfully updated; and failure (failure) indicates that the blockchain client is not successfully updated. It is uniformly described herein that manners of deploying, updating, locking, and disabling a blockchain client may be respectively similar to or the same as manners of deploying, updating, locking, and disabling a blockchain enabler. Details are not described herein again. The following uses deploying, updating, locking, and disabling a blockchain enabler as an example for description.

The subdomain BC capability update request (Sub BC enabler update request) may carry a blockchain enabler profile of nodes in a same subdomain (that is, a sub BC enabler profile) or a blockchain enabler update profile (that is, an updated part of a subdomain blockchain enabler profile); and the subdomain BC capability update response (Sub BC enabler update response) may carry a "success/failure" parameter. Success (success) indicates that a blockchain enabler of the nodes in the subdomain is successfully updated, that is, a blockchain capability of the nodes in the subdomain is successfully updated; and failure (failure) indicates that a blockchain enabler of the nodes in the subdomain is not successfully updated.

The BC capability lock request (BC enabler lock request) may carry a "lock reason" parameter, for example, a BC capability upgrade (a blockchain enabler needs to be locked temporarily so that it cannot be invoked); and the BC capability lock response (BC enabler lock response) may carry a "success/failure" parameter. Success (success) indicates that the blockchain enabler is successfully locked; and failure (failure) indicates that the blockchain enabler is not successfully locked. Success (success) carried in the subdomain BC capability lock response (Sub BC enabler lock response) indicates that the blockchain enabler of the nodes in the subdomain is successfully locked, and failure (failure) carried in the subdomain BC capability lock response indicates that the blockchain enabler of the nodes in the subdomain is not successfully locked.

The BC capability disable request (BC enabler disable request) may carry a "disable reason" parameter, for example, a network stops providing a blockchain service; and the BC capability disable response (BC enabler disable response) may carry a "success/failure" parameter. Success (success) indicates that a blockchain enabler is successfully disabled; and failure (failure) indicates that a blockchain enabler is not successfully disabled. Success (success) carried in the subdomain BC capability disable request (Sub BC enabler disable response) indicates that a blockchain enabler of nodes in a subdomain is successfully disabled, and failure (failure) carried in the subdomain BC capability disable request (Sub BC enabler disable response) indicates that the blockchain enabler of nodes in a subdomain is not successfully disabled.

The blockchain control function may indicate deployment and configuration of a blockchain, and transmission of some blockchain parameters, and may be classified into the following five types: blockchain deployment, blockchain configuration, blockchain node configuration, blockchain information transmission, and blockchain capability information transmission.

Blockchain deployment may include: blockchain requirement sending by a node, blockchain setup, blockchain removal, and blockchain updating. Blockchain requirement sending by a node may be that the node sends a blockchain service request to an LAF, to request to set up a blockchain, and the LAF performs a chain setup procedure, that is, a blockchain setup procedure, and sends a blockchain parameter to all selected nodes (on which a blockchain enabler or a blockchain client is deployed), to set up the blockchain. Blockchain setup may be that an LAF determines to set up a blockchain based on a requirement from a node or an upper-layer application, determines nodes included in the blockchain, a function required by the blockchain, and a specific algorithm that is used, and actively sets up the blockchain. Blockchain removal may be that an LAF removes a blockchain that is set up. Blockchain updating may be that an LAF selects a new algorithm used in a blockchain, and updates a blockchain parameter, for example, a transaction/ledger format, a peer to peer (peer to peer, P2P) protocol, a consensus mechanism, and a security algorithm.

Blockchain configuration may include blockchain connection configuration and blockchain node configuration. Blockchain connection configuration may be configuring a connection parameter of a blockchain, such as a connection method, a network topology, and configuring a blockchain node list. For example, in a blockchain connection configuration manner, an LAF configures each node through the blockchain control function, to implement a centralized configuration manner. Blockchain node configuration may be configuring an attribute of a blockchain node, such as a node role, a node running status, and whether the node is a super node. It is uniformly described herein that a plurality of parameters may be configured through blockchain configuration at a time, or a specific parameter may be configured at a time.

Blockchain information transmission may include blockchain information request sending and blockchain information subscription/notification. Blockchain information request sending may be that an LAF requests to obtain blockchain information to which a node belongs, for example, a blockchain profile (BC profile). Blockchain information subscription/notification may be subscribing to/notifying blockchain information, such as a BC profile. The blockchain profile (BC profile) may indicate a blockchain attribute, including a specific algorithm used by a blockchain and node information on the blockchain.

Blockchain capability information transmission may include blockchain capability information registration/de-registration, blockchain capability information obtaining, and blockchain capability information subscription/notification. Blockchain capability information registration may be that when a node joins a network, the node registers its own blockchain capability information with the network. Blockchain capability information de-registration may be that when a node leaves a network, the node de-registers its own blockchain capability information. Blockchain (BC) capability information obtaining may be that an LAF obtains a blockchain capability information of a node. Blockchain capability information subscription/notification may be subscribing to/notifying blockchain capability information of a node, such as a BC enabler profile. It is uniformly described herein that, during blockchain information transmission or blockchain capability information transmission, a plurality of parameters may be obtained at a time, or a specific parameter may be obtained at a time.

The blockchain control function may provide the following instruction sets:
BC service request (BC service request): for blockchain service requesting;
BC setup request/response (BC setup request/response): for blockchain creation;
BC remove request/response (BC remove request/response): for blockchain removal;
BC update request/response (BC update request/response): for blockchain updating;
Subdomain BC request/response (Sub BC request/response): the subdomain BC request indicates a subdomain blockchain requirement, for example, requiring that a subdomain has one chain including N nodes;
BC connection configuration request/response (BC connection config request/response): for blockchain connection configuration;
BC connection method configuration request/response (BC connection method config request/response): for blockchain connection method configuration;
Blockchain node list configuration request/response (BC connection node list config request/response): for blockchain node list configuration;
Chain node attribute configuration request/response (BC node config request/response): for chain node attribute configuration;
Chain node role configuration request/response (BC node role config request/response): for chain node role configuration;
Chain node running status configuration request/response (BC node status config request/response): for chain node running status configuration, for example, enabling, suspending, or revoking transaction reporting;
Subdomain blockchain configuration request/response (Sub BC config request/response): for subdomain blockchain configuration, for example, requiring a subdomain blockchain to be configured with N full nodes;
(Subdomain) BC profile request/response ((Sub) BC profile request/response): for (subdomain) BC profile requesting;
(Subdomain) BC profile subscribe/notify ((Sub) BC profile subscribe/notify): for (subdomain) BC profile subscription/notification;
(Subdomain) chain name/ID request/response ((Sub) BC name/ID request/response): for (subdomain) chain name/ID requesting;
(Subdomain) chain type request/response ((Sub) BC type request/response): for (subdomain) chain type requesting;
(Subdomain) BC capability registration request/response ((Sub) BC enabler registration request/response): for (subdomain) BC capability registration;
(Subdomain) BC capability de-registration request/response ((Sub) BC enabler de-registration request/response): for (subdomain) BC capability de-registration;
(Subdomain) BC capability information obtaining request/response ((Sub) BC enabler capability request/response): for (subdomain) BC capability information obtaining; and
(Subdomain) BC capability information subscribe/notify ((Sub) BC enabler capability subscribe/notify): for (subdomain) BC capability information subscription/notification.

The foregoing shows a part of examples of the instruction set that may be provided by the blockchain control function. The blockchain control function may further provide another instruction. This is not limited herein. The following describes information carried in an instruction that may be provided by the blockchain control function.

The BC service request (BC service request) may carry a "blockchain function (identity, spectrum sharing, and the like)" parameter for requesting to join a chain or requesting an LAF to set up a chain (if no chain of this type exists).

The BC setup request (BC setup request) may carry a blockchain profile (that is, a BC profile); and the BC setup response (BC setup response) may carry a "success/failure" parameter. Success (success) indicates that a blockchain is successfully set up; and failure (failure) indicates that the blockchain is not successfully set up.

The BC remove request (BC remove request) may carry a blockchain name or ID; and the BC remove response (BC remove response) may carry a "success/failure" parameter. Success (success) indicates that a blockchain is successfully removed, and failure (failure) indicates that the blockchain is not successfully removed.

The BC update request (BC update request) may carry a blockchain profile (that is, a BC profile) or an updated part of a blockchain profile; and BC update response (BC update response) may carry a "success/failure" parameter. Success (success) indicates that a blockchain is successfully updated; and failure (failure) indicates that the blockchain is not successfully updated.

The subdomain BC request (Sub BC request) may carry a subdomain blockchain profile sub BC profile; and the subdomain BC response (Sub BC response) may carry a "success/failure" parameter. Success (success) indicates that a blockchain is successfully set up; and failure (failure) indicates that the blockchain is not successfully set up.

The BC connection configuration request (BC connection config request) may carry parameters such as a connection method, a network topology, and a blockchain node list; and the BC connection configuration response (BC connection config response) may carry a "success/failure" parameter. Success (success) indicates that a blockchain connection is successfully configured; and failure (failure) indicates that the blockchain connection is not successfully configured.

The BC connection method configuration request (BC connection method config request) may carry a "connection method (only centralized connection is supported, or dynamic blockchain connection is also supported)" parameter; and the BC connection method configuration response (BC connection method config response) may carry a "success/failure" parameter. Success (success) indicates that a blockchain connection method is successfully configured; and failure (failure) indicates that the blockchain connection method is not successfully configured. The centralized connection indicates that an LAF configures a node list for a blockchain node, that is, information such as an IP address of another blockchain node that can be connected to the node, to help the node set up a connection with the another node. The dynamic blockchain connection indicates that a node joins a blockchain network by interacting with a node on the blockchain, that is, the dynamic blockchain connection function mentioned above, without requiring an LAF to perform configuration through the blockchain control function.

The blockchain node list configuration request (BC connection node list config request) may carry a "blockchain node list" parameter; and the blockchain node list configuration response (BC connection node list config response) may carry a "success/failure" parameter. Success (success) indicates that a blockchain node list is successfully configured; and failure (failure) indicates that the blockchain node list is not successfully configured.

The chain node attribute configuration request (BC node config request) may carry parameters such as a node role, a node running status, and whether the node is a super node; and the chain node attribute configuration response (BC node config response) may carry a "success/failure" parameter. Success (success) indicates that a chain node attribute (an attribute of a node on a blockchain) is successfully configured; and failure (failure) indicates that the chain node attribute is not successfully configured.

The chain node role configuration request (BC node role config request) may carry a "node role (a full node, a light node, a micronode, a client, and the like)" parameter; and the chain node role configuration response (BC node role config response) may carry a "success/failure" parameter. Success (success) indicates that a chain node role (a role of a node on a blockchain) is successfully configured; and failure (failure) indicates that the chain node role is not successfully configured.

The chain node running status configuration request (BC node status config request) may carry a "node state (a configured state, a locked state, a disabled state, ...)" parameter; and the chain node running status configuration response (BC node status config response) may carry a "success/failure" parameter. Success (success) indicates that a chain node running status (a running status of a node on a blockchain) is successfully configured; and failure (failure) indicates that the chain node running status is not successfully configured.

The subdomain BC profile request (Sub BC config request) may carry a subdomain blockchain profile (that is, a sub BC profile). The subdomain blockchain profile (that is, a sub BC profile) may indicate a subdomain blockchain attribute, including a specific algorithm used by all blockchains in a subdomain and node information in the subdomain. The subdomain blockchain profile is for configuring the blockchains in the subdomain. The profile can include information about all the blockchains in the subdomain. The subdomain BC configuration response (Sub BC config response) may carry a "success/failure" parameter. Success (success) indicates that the blockchains in the subdomain are successfully set up; and failure (failure) indicates that the blockchains in the subdomain are not successfully set up.

The subdomain data configuration request (BC data config request/response) is for configuration of the blockchain data function, including configuration of a data transmission format, configuration of a correspondence between a BC data type (BC bearer) of an air interface and a quality of service (quality of service, QoS) flow. The BC data config request may carry a configuration of the blockchain data function. The subdomain data configuration response (BC config response) may carry a "success/failure" parameter. Success (success) indicates that the blockchain data function is successfully configured; and failure (failure) indicates that the blockchain data function is not successfully configured.

The (subdomain) BC profile request ((Sub) BC profile request) may carry a (subdomain) blockchain name/ID; and the (subdomain) BC profile response ((Sub) BC profile response) may carry a (subdomain) blockchain profile (that is, a sub BC profile).

The (subdomain) BC profile subscribe ((Sub) BC profile subscribe) may carry a (subdomain) blockchain name/ID; and the (subdomain) BC profile notify ((Sub) BC profile notify) may carry a (subdomain) blockchain profile (that is, a sub BC profile).

The (subdomain) BC name/ID response ((Sub) BC name/ID response) may carry the (subdomain) blockchain name/ID.

The (subdomain) BC type response ((sub) BC type response) may carry a (subdomain) blockchain type, for example, a consortium chain/a public chain/a private chain.

The subdomain blockchain capability registration request (Sub BC enabler registration request) can carry a subdomain blockchain enabler profile (sub BC enabler profile). The subdomain blockchain enabler profile may indicate a subdomain attribute, including a capability of a subdomain, a blockchain capability of the subdomain, and information of a node in the subdomain. For example, the information of the node in the subdomain includes a node type (a UE, a base station, or an NF) that supports a blockchain capability in the subdomain and a quantity corresponding to each type. For example, the subdomain blockchain enabler profile may be used to describe a blockchain algorithm supported by the subdomain. The subdomain blockchain capability registration response (Sub BC enabler registration response) may carry a "success/failure" parameter. Success (success) indicates that a blockchain enabler in the subdomain is successfully registered; and failure (failure) indicates that the blockchain enabler in the subdomain is not successfully registered. The blockchain capability registration request (BC enabler registration request) can carry a blockchain enabler profile (BC enabler profile). Success (success) carried in the blockchain capability registration response (BC enabler registration response) indicates that a blockchain enabler of a node is successfully registered; and failure (failure) carried in the BC enabler registration response indicates that the blockchain enabler of the node is not successfully registered. In a communication system, after joining a network, a node initiates a registration procedure to a core network element. In some embodiments of this application, during registration, the node may further report a blockchain capability supported by the node (if the node already has the blockchain capability). This is applicable to a scenario in which the node accesses the network not for the first time, or the node accesses an operator 2 after obtaining the blockchain capability from an operator 1, and then reports the blockchain capability supported by the node. This procedure is optional. A core network may not support a blockchain function, and therefore blockchain capability information of the node does not need to be obtained. Alternatively, to improve node access and registration efficiency, the blockchain capability information is not registered, and the blockchain capability information is requested only before being used.

The (subdomain) blockchain capability de-registration request ((Sub) BC enabler de-registration request) may carry an ID/IP address of a (subdomain) blockchain node. The (subdomain) blockchain capability de-registration response (Sub BC enabler de-registration response) may carry a "success/failure" parameter. Success (success) indicates that a blockchain enabler in a subdomain is successfully de-registered; and failure (failure) indicates that the blockchain enabler in the subdomain is not successfully de-registered. Success (success) carried in the blockchain capability de-registration response (BC enabler de-registration response) indicates that a blockchain enabler of a node is successfully de-registered; and failure (failure) carried in the BC enabler de-registration response indicates that the blockchain enabler of the node is not successfully de-registered.

The subdomain BC capability information obtaining request (Sub BC enabler capability request) may carry identity information of a subdomain. The BC enabler capability request may carry identity information of a node. The subdomain BC capability information obtaining response (Sub BC enabler capability response) may carry a blockchain capability information of a node in a subdomain. The BC capability information obtaining response (BC enabler capability response) may carry blockchain capability information of a node. Although an LAF configures a BC enabler immediately after a node join a network, the node may dynamically update the BC enabler based on its own requirement and generate a new profile. Alternatively, when a node joins a new network, the node does not carry blockchain capability information in a registration message, and in some scenarios, the network needs to invoke a blockchain service, and can further perform configuration or invoke the node to set up a chain only after requesting the blockchain capability information of the node.

The subdomain BC capability information subscribe (Sub BC enabler capability subscribe) may carry identity information of a subdomain; and the Sub BC enabler capability notify may carry blockchain capability information of a node in the subdomain. The BC enabler capability subscribe may carry identity information of a node; and the BC capability information notify (BC enabler capability notify) may carry blockchain capability information of a node. The (subdomain) BC capability information subscribe/notify ((Sub) BC enabler capability subscribe/notify) is applicable to a scenario in which a network requires a node to periodically report a blockchain capability supported by the node.

It can be learned that many instructions include an operation on a blockchain capability of a node, and also include an operation on a subdomain. The operation on the subdomain may ignore details of the node. A part of instructions in an instruction set that may be provided by the blockchain control function may be moved to an instruction set that may be provided by the blockchain management function. For example, the instruction set that may be provided by the blockchain management function includes a BC setup request/response, a BC remove request/response, and a BC update request/response, and the instruction set that may be provided by the blockchain control function does not include the BC setup request/response, the BC remove request/response, and the BC update request/response.

The following describes, with reference to FIG. 11, how an LAF implements a blockchain management function and a blockchain control function.

FIG. 11 is an interaction flowchart of a communication method according to an embodiment of this application. In FIG. 11, a first node is an LAF or a sub LAF in a telecommunication network, and a second node is a node on which a blockchain enabler or a blockchain client is to be deployed or deployed in the telecommunication network. The method shown in FIG. 11 is applied to the telecommunication network. As shown in FIG. 11, the method includes the following steps.

1101: The first node sends a first message to the second node.

Correspondingly, the second node receives the first message from the first node. The first message is for at least one of blockchain capability management, blockchain capability deployment, blockchain client management, blockchain client deployment, blockchain setup, blockchain removal, blockchain updating, blockchain configuration, blockchain parameter obtaining, subdomain blockchain deployment, or subdomain blockchain configuration. The first message may be one instruction in an instruction set that may be provided by the blockchain management function, or may be one instruction in an instruction set that may be provided by the blockchain control function.

For example, the first node may be an LAF in a core network, and the second node is a node on which a blockchain enabler or a blockchain client is deployed, for example, a terminal device, an access network device, or an NF. The first message is for at least one of blockchain capability management, blockchain setup, blockchain removal, blockchain updating, blockchain configuration, or blockchain parameter obtaining. For example, the first node may be an LAF in a core network or a sub LAF in an access network, the second node is a node on which no blockchain enabler or blockchain client is deployed, that is, a node that does not support a blockchain capability, and the first message is for blockchain capability deployment. For example, the first node may be an LAF in a core network, the second node is a sub LAF in an access network, and the first message is for subdomain blockchain deployment or configuration. For example, the first node may be a sub LAF in an access network, the second node is a node on which a blockchain enabler or a blockchain client is deployed, for example, a terminal device, an access network device, or an NF, and the first message is for at least one of blockchain capability management, blockchain setup, blockchain removal, blockchain updating, blockchain configuration, or blockchain parameter obtaining.

Refer to FIG. 6. An example of step 1101 is as follows: The first node sends the first message by using a blockchain control protocol, where the blockchain control protocol is a protocol between a core network element and a terminal device, or the blockchain control protocol is a protocol between a core network element and an access network device. Refer to FIG. 7. An example of step 1101 is as follows: The first node sends the first message by using a blockchain control protocol, where the blockchain control protocol is a protocol between different core network elements, or the blockchain control protocol is a protocol between a core network element and an access network device, or the blockchain control protocol is a protocol between an access network device and a terminal device, or the blockchain control protocol is a protocol between different access network devices. Refer to FIG. 8. When the second node is a terminal device, an example of step 1101 is as follows: When the first node is a core network element, the first message is sent to the second node by using a first blockchain control protocol. Alternatively, an example of step 1101 is as follows: When the first node is an access network device, the first message is sent to the second node by using a second blockchain control protocol, where the second blockchain control protocol is different from the first blockchain control protocol. Refer to FIG. 9. An example of step 1101 is as follows: The first node sends the first message to the second node by using a non-access-stratum protocol, where the first node is a core network element, and the second node is a terminal device. Another example of step 1101 is as follows: The first node sends the first message to the second node by using a radio resource control protocol, where the first node is an access network device, and the second node is a terminal device. Another example of step 1101 is as follows: The first node sends the first message to the second node by using a next-generation application protocol, where the first node is a core network element, and the second node is an access network device. Another example of step 1101 is as follows: The first node sends the first message to the second node by using an Xn interface application procedure protocol, where the first node and the second node are different access network devices.

1102: The second node sends a second message to the first node.

Correspondingly, the first node receives the second message from the second node. The second message is for responding to the first message. A protocol used by the second node to send the second message to the first node may be the same as a protocol used by the first node to send the first message to the second node. Details are not described herein again.

In a possible implementation, the first message is for at least one of blockchain capability deletion, enabling, updating, locking, or disabling. In other words, the first message is used by the second node for at least one of blockchain capability deletion, enabling, updating, locking, or disabling. Alternatively, the first message is for at least one of deleting, enabling, updating, locking, or disabling a blockchain capability of the second node. For example, the first message is a message for blockchain capability deletion, that is, a BC enabler delete request; and the second message is a message indicating that the blockchain capability deletion of the second node succeeds or fails, that is, a BC enabler delete response. For example, the first node is an LAF, the second node is a sub LAF, and the first message is a message for subdomain blockchain capability updating, that is, a Sub BC enabler update request; and the second node may update, based on the first message, a blockchain capability of a part or all of nodes in a subdomain associated with the second node, and the second message is a message indicating that the subdomain blockchain capability updating of the second node succeeds or fails, that is, a Sub BC enabler update response. For example, the first node is an LAF, the second node is a sub LAF, the first message is a message for subdomain blockchain capability disabling, that is, a Sub BC enabler disable request; and the second node may disable, based on the first message, a blockchain capability of a part or all of nodes in a subdomain associated with the second node, and the second message is a message indicating that the subdomain blockchain capability disabling of the second node succeeds or fails, that is, a Sub BC enabler disable response. In this implementation, at least one of deleting, enabling, updating, locking, or disabling a blockchain capability of a node can be implemented in the telecommunication network.

In a possible implementation, the first message is for blockchain removal. In this specification, a blockchain associated with a node indicates a blockchain that includes the node. For example, the first node is an LAF, the second node is a sub LAF, and the first message is a message used by the second node to remove one or more blockchains in a subdomain associated with the second node, that is, a sub BC remove request. The second node may remove, based on the first message, the one or more blockchains in the subdomain associated with the second node. The second message indicates whether the second node successfully removes the one or more blockchains in the subdomain associated with the second node. For example, the second message is a sub BC remove response. In this implementation, the first message is for at least one of blockchain setup, blockchain removal, or blockchain updating, so that at least one of blockchain setup, blockchain removal, or blockchain updating can be implemented in the telecommunication network.

In a possible implementation, the first message is for blockchain connection configuration or blockchain node configuration. The blockchain connection configuration may include at least one of blockchain connection method configuration, blockchain network topology configuration, or blockchain node list configuration. For example, one blockchain connection method supports only centralized connection, and another blockchain connection method supports both centralized connection and dynamic blockchain connection. An example of blockchain network topology configuration is as follows: The blockchain network topology configuration indicates that there is a super node, and the super node is a node that is in a blockchain and that is responsible for performing authentication and authorization on a node joining a chain and storing a complete blockchain ledger. The blockchain node configuration may include at least one of blockchain node attribute configuration, blockchain node role configuration, or blockchain node running status configuration. A blockchain node attribute may include a node role, a node running status, whether the node is a super node, and the like. A blockchain node role may include a full node, a light node, a micronode, a client, and the like. The blockchain node role is for limiting different permissions of blockchain nodes. For example, the full node has the following permissions: inquiring/reporting a transaction, generating a block, participating in consensus, writing a ledger, and storing a ledger; the light node has the following permissions: inquiring/reporting a transaction, generating a block, participating in consensus, and writing a ledger; the micronode has the following permissions: inquiring/reporting a transaction, and generating a block; and the client has the following permissions: inquiring/reporting a transaction. A running status of a blockchain node may include configured (configured), locked (locked), disabled (disable), and the like. For example, the first node is an LAF, the second node is a node on which a blockchain enabler or a blockchain client is deployed, and the first message is a message used by the second node to configure a blockchain connection, that is, a BC connection config request. The second node may configure the blockchain connection of the second node based on the first message, that is, configure a blockchain connection method, a blockchain network topology, and a blockchain node list of the second node. The second message is a message indicating that the second node successfully configures the blockchain connection or fails to configure the blockchain connection, that is, a BC connection config response. For example, the first node is an LAF, the second node is a sub LAF, and the first message is a message used by the second node to configure a blockchain in a subdomain associated with the second node, that is, a Sub BC config request. The second node may configure the blockchain in the subdomain associated with the second node based on the first message. For example, the second node configures N full nodes for the blockchain in the subdomain associated with the second node. The second message is a message indicating whether the second node successfully configures the blockchain in the subdomain associated with the second node, that is, a Sub BC config response. In this implementation, blockchain connection configuration or blockchain node configuration can be implemented in the telecommunication network.

In a possible implementation, the first message is for at least one of requesting a blockchain profile, subscribing to a blockchain profile, requesting a blockchain identity, requesting a blockchain type, requesting blockchain capability information, or subscribing to blockchain capability information. For example, the first node is an LAF, the second node is a node on which a blockchain enabler or a blockchain client is deployed, the first message is a message for requesting a profile of a blockchain including the second node, that is, a BC profile request, and the second message is a message carrying the profile of the blockchain including the second node, that is, a BC profile response. For example, the first node is an LAF, the second node is a sub LAF, the first message is a message for requesting a type of a blockchain in a subdomain associated with the second node, that is, a Sub BC type request, and the second message indicates the type of the blockchain in the subdomain associated with the second node. For example, the second message is a Sub BC type response. In this implementation, the first node may obtain a corresponding blockchain parameter by sending the first message, to better perform blockchain management and/or configuration.

Existing blockchain protocols and protocol stacks cannot be simply directly applied to the telecommunication network. In this embodiment of this application, the first node sends the first message to the second node, to implement at least one of blockchain capability management, blockchain capability deployment, blockchain setup, blockchain removal, blockchain updating, blockchain configuration, blockchain parameter obtaining, subdomain blockchain deployment, or subdomain blockchain configuration in the telecommunication network.

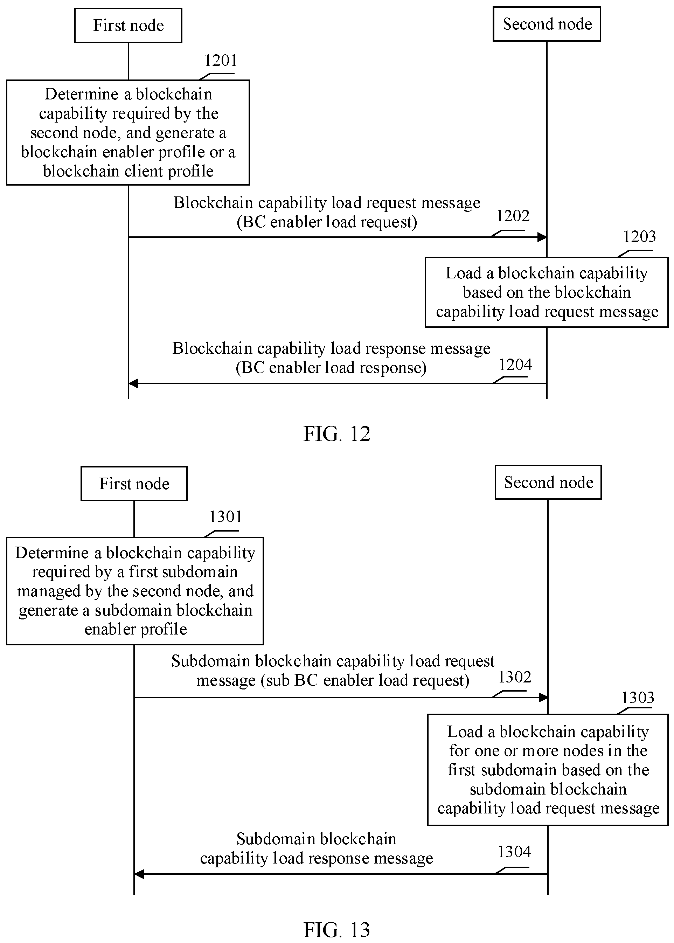

FIG. 12 is an interaction flowchart of another communication method according to an embodiment of this application. A method procedure in FIG. 12 is an example of the method described in FIG. 11. FIG. 12 is an example procedure in which an LAF or a sub LAF deploys a blockchain enabler or a blockchain client for a node (a UE, a base station, an NF, or the like) that does not support a blockchain capability. As shown in FIG. 12, the method includes the following steps.

1201: A first node determines a blockchain capability required by a second node, and generates a blockchain enabler profile or a blockchain client profile.

In a possible implementation, after determining, based on a requirement, that the second node needs to load a blockchain enabler or a blockchain client, the first node determines the blockchain capability (a transaction/ledger format, a P2P protocol, a consensus mechanism, an incentive mechanism, a wallet type, a security algorithm, or the like) required by the second node, and generates the blockchain enabler profile (BC enabler profile). For example, an LAF receives a requirement (for example, node identity authentication performed by using a blockchain) from an upper-layer service, and determines that a node in a telecommunication network requires a blockchain capability. If the requirement states that the blockchain requires a high security level, the LAF can select a plurality of post-quantum cryptography algorithms as a security algorithm of the node. The LAF may generate the BC enabler profile based on a selected blockchain capability and a capability reported by the node during registration. If the node reports that the node does not have a BC enabler during registration, the LAF starts the procedure, that is, the method procedure in FIG. 12. Step 1201 is optional, and a manner in which the first node obtains the blockchain enabler profile is not limited in this application.

1202: The first node sends a blockchain capability load request message (BC enabler load request) to the second node.

Correspondingly, the second node receives the blockchain capability load request message from the first node.

The blockchain capability load request message is for requesting the second node to deploy the blockchain enabler or the blockchain client, that is, for requesting the second node to load the blockchain capability. The message may carry an installation package for the second node to deploy the blockchain capability and a first profile, and the first profile indicates the blockchain capability of the second node.

The blockchain capability load request (BC enabler load request) message is an example of the first message in FIG. 11. For example, the first node is an LAF, and the second node is a node (a UE, a base station, an NF, or the like) that does not support the blockchain capability.

For example, the installation package used by the second node to deploy the blockchain capability includes a blockchain protocol and internal processing logic of the node. The internal processing logic of the node indicates code implementation of a transaction/ledger format, a P2P protocol, a consensus mechanism, an incentive mechanism, a wallet type, a security algorithm, and the like of a blockchain, and code for running a blockchain function. For example, the blockchain capability load request message may further include a mirror code download address of the blockchain enabler or the blockchain client. For example, the first profile may include a capability of the node (for example, a capability of the second node) and the blockchain capability of the node (for example, the blockchain capability to be deployed on the second node).

The capability of the node may include one or more of the following: a node identity (identity, ID), a node address, a node type, a security capability of the node, and a trust credential of the node.

The node type is, for example, one of a UE, a gNB, an NF, and a blockchain all-in-one machine. The security capability of the node is, for example, having a trusted execution environment and supporting a privacy protection mechanism. The trust credential of the node is, for example, a public key.

The blockchain capability of the node may include one or more of the following:
a node role: one of a full node, a light node, a micronode, a client, or the like;
a node status: for example, one of configured (configured), locked (locked), or disabled (disable);
a P2P protocol supported by the node: for example, supporting a Gossip-based P2P protocol or a hash table-based P2P protocol;
a consensus mechanism supported by the node: one of a proof of work (proof of work, PoW) algorithm, a proof of stake (proof of stake, PoS) algorithm, a delegated proof of stake (delegated proof of stake, DPoS) algorithm, a practical byzantine fault tolerance (practical byzantine fault tolerance, PBFT) algorithm, or the like;
an incentive mechanism supported by the node: without an incentive or with an incentive (for example, a reward for completing a task or a reward for participating in a task);
a wallet type supported by the node: for example, a digital currency or a virtual currency;
a transaction/ledger format supported by the node: for example, whether an editable capability is supported, or whether privacy protection is provided;
a security algorithm supported by the node: for example, a hash algorithm, a signature algorithm, or an encryption algorithm; or
a smart contract supported by the node: for example, a built-in smart contract list, and whether to allow development and upload of a new contract.

1203: The second node loads the blockchain capability based on the blockchain capability load request message.

Loading the blockchain capability may be deploying the blockchain enabler or the blockchain client, and configuring the deployed blockchain enabler or blockchain client based on the blockchain enabler profile (BC enabler profile).

1204: The second node sends a blockchain capability load response message to the first node.

Correspondingly, the first node receives the blockchain capability load response message (BC enabler load response) from the second node. The blockchain capability load response message may carry a result of loading the blockchain capability by the second node, and the result includes that loading the blockchain capability by the second node succeeds (success)/fails (failure).

In this embodiment of this application, the first node sends the blockchain capability load request message to the second node, to request the second node to deploy the blockchain capability. In this way, the blockchain capability may be loaded for the node in the telecommunication network.

FIG. 13 is an interaction flowchart of another communication method according to an embodiment of this application. A method procedure in FIG. 13 is an example of the method described in FIG. 11. FIG. 13 is an example procedure in which an LAF requests (or indicates) a sub LAF to deploy a blockchain enabler or a blockchain client for a node in a subdomain associated with the sub LAF. As shown in FIG. 13, the method includes the following steps.

1301: A first node determines a blockchain capability required by a first subdomain managed by a second node, and generates a subdomain blockchain enabler profile.

In a possible implementation, after determining, based on a requirement, that a node in the first subdomain needs to load a blockchain enabler or a blockchain client, the first node determines a blockchain capability required by the node in the first subdomain, and generates the subdomain blockchain enabler profile (sub BC enabler profile). Step 1301 is optional, and a manner in which the first node obtains the subdomain blockchain enabler profile is not limited in this application.

1302: The first node sends a subdomain blockchain capability load request message to the second node.

Correspondingly, the second node receives the subdomain blockchain capability load request (sub BC enabler load request) message from the first node. For example, the first node is an LAF, and the second node is a sub LAF. The subdomain blockchain capability load request message is an example of the first message in FIG. 11. The subdomain blockchain capability load request message is for deploying a blockchain capability of one or more nodes in a first subdomain. The first subdomain includes one or more nodes managed by the second node, and the second node is managed by the first node. The subdomain blockchain capability load request message carries an installation package for the one or more nodes to deploy the blockchain capability, a second profile, and information indicating a quantity of nodes that support the blockchain capability in the first subdomain. The second profile indicates the blockchain capability of the one or more nodes. Alternatively, the second profile indicates the blockchain capability of the subdomain, for example, a blockchain algorithm supported by the subdomain. The second profile, namely, the subdomain blockchain enabler profile (sub BC enabler profile), may be for configuring the blockchain enabler or the blockchain client, so that the blockchain enabler or the blockchain client can be invoked.

For example, the installation package for the one or more nodes to deploy the blockchain capability includes a blockchain protocol and internal processing logic of the node. For example, the second profile includes a capability of the subdomain and the blockchain capability of the subdomain. In a possible implementation, the second profile further includes the information indicating the quantity of nodes that support the blockchain capability in the first subdomain. For example, the information indicating the quantity of nodes that support the blockchain capability in the first subdomain includes: a quantity of nodes that should support the blockchain capability in the subdomain (for example, the first subdomain); (optionally) a quantity of UEs that should support the blockchain capability in the subdomain; (optionally) a quantity of base stations that should support the blockchain capability in the subdomain; and (optionally) a quantity of NFs that should support the BC capability in the subdomain. The subdomain blockchain enabler profile indicates (or describes) blockchain capability information of the subdomain, that is, a blockchain algorithm supported by the subdomain. The subdomain blockchain enabler profile may include the following content: the capability of the subdomain, the blockchain capability of the subdomain, and node information of the subdomain.

For example, the capability of the subdomain may include the following content:
a sub LAF ID, that is, an ID of the second node; and a sub LAF IP address, that is, an IP address of the second node; and
a security capability supported by a network, for example, having a trusted execution environment and supporting a privacy protection mechanism.

For example, the blockchain capability of the subdomain may include the following content:
a network (that is, a subdomain network) topology structure: for example, one of a centralized structure, a fully distributed structure, a hybrid structure, a layered structure, or the like;
a P2P protocol supported by a network: for example, supporting a Gossip-based P2P protocol or a hash table-based P2P protocol;
a consensus mechanism supported by a network: one of PoW, PoS, DPoS, PBFT, or the like;
an incentive mechanism supported by a network: for example, without an incentive or with an incentive;
a wallet type supported by a network: for example, a digital currency or a virtual currency;
a transaction/ledger format supported by a network: for example, whether to be editable, or whether privacy protection is provided;
a security algorithm supported by a network: for example, a hash algorithm, a transaction encryption algorithm, or a ledger encryption algorithm; or
a smart contract supported by a network: for example, a built-in smart contract, and whether to allow development and upload of a new contract.

For example, the subdomain node information may include a node type (a UE, a base station, or an NF) that supports the blockchain capability and a quantity corresponding to each node type that supports the blockchain capability.

1303: The second node loads the blockchain capability for the one or more nodes in the first subdomain based on the subdomain blockchain capability load request message.

Loading the blockchain capability may be deploying the blockchain enabler.

In a possible implementation, the second node determines one or more nodes that need to load the blockchain enabler in the first subdomain, and sends a blockchain capability load request message to the one or more nodes. For details, refer to step 1202. The one or more nodes load the blockchain capability based on the blockchain capability load request message. For details, refer to step 1203. The one or more nodes separately send a blockchain capability load response message to the second node. For details, refer to step 1204.

1304: The second node sends a subdomain blockchain capability load response message to the first node.

Correspondingly, the first node receives the subdomain blockchain capability load response message (sub BC enabler load response) from the second node. The subdomain blockchain capability load response message may carry a result of loading the blockchain capability by the second node for the one or more nodes in the first subdomain, and the result is that loading succeeds (success)/fails (failure). The result is determined based on the blockchain capability load response message sent by the one or more nodes in the first subdomain.

In this embodiment of this application, the first node sends the subdomain blockchain capability load request message to the second node, to request to load the blockchain capability for the one or more nodes in the first subdomain. In this way, the blockchain capability may be loaded for the node in one subdomain in a telecommunication network.

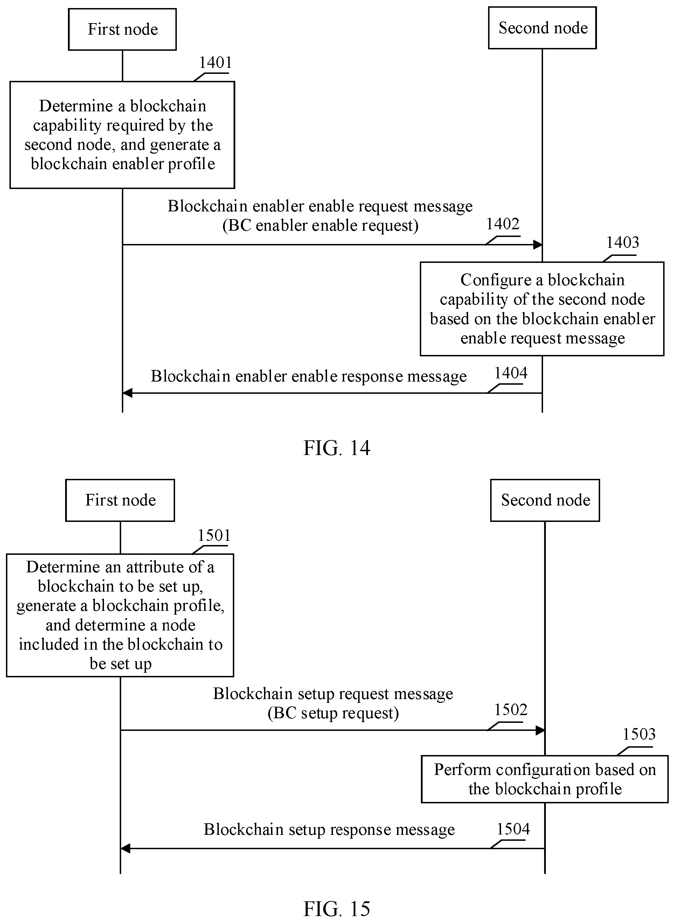

FIG. 14 is an interaction flowchart of another communication method according to an embodiment of this application. A method procedure in FIG. 14 is an example of the method described in FIG. 11. FIG. 14 is an example procedure of enabling a blockchain capability of a node by an LAF or a sub LAF. As shown in FIG. 14, the method includes the following steps.

1401: A first node determines a blockchain capability required by a second node, and generates a blockchain enabler profile.

Step 1401 is optional, and a manner in which the first node obtains the blockchain enabler profile is not limited in this application. For step 1401, refer to step 1201 in FIG. 12.

1402: The first node sends a blockchain enabler enable request message to the second node.

Correspondingly, the second node receives the blockchain enabler enable request (BC enabler enable request) message from the first node. For example, the first node is an LAF or a sub LAF, and the second node is a node (a UE, a base station, an NF, or the like) on which a blockchain enabler is deployed. The blockchain enabler enable request message is an example of the first message in FIG. 11. The blockchain capability enable request message is for enabling the blockchain capability of the second node in a telecommunication network. The blockchain capability enable request message may carry information indicating the blockchain capability of the second node, or may carry information for configuring the blockchain capability of the second node. For example, the blockchain capability enable request message carries a blockchain enabler profile (BC enabler profile), and the blockchain enabler profile is for configuring the blockchain enabler, so that the blockchain enabler can be invoked. The blockchain enabler profile carried in the blockchain capability enable request message may be the same as the blockchain enabler profile carried in the blockchain capability load request message, or may be a subset of the blockchain enabler profile carried in the blockchain capability load request message, that is, only a part of the blockchain capabilities are enabled. For descriptions of the blockchain enabler profile, refer to the descriptions of the blockchain enabler profile in step 1202. Details are not described herein again.

1403: The second node configures the blockchain capability of the second node based on the blockchain enabler enable request message.

Configuring the blockchain capability of the second node may be configuring (or enabling) the deployed blockchain enabler. After the second node configures the blockchain capability of the second node, the blockchain capability of the second node enters an enabled state, that is, the blockchain enabler enters an enabled state.

1404: The second node sends a blockchain enabler enable response message to the first node.

Correspondingly, the first node receives the blockchain enabler enable response (BC enabler enable response) message from the second node. The blockchain enabler enable response message carries a result of enabling the blockchain capability of the second node by the second node, and the result is that enabling succeeds or fails.

In this embodiment of this application, the first node sends the blockchain enabler enable request message to the second node, to request the second node to enable the blockchain capability of the second node. In this way, the blockchain capability of the node can be enabled in the telecommunication network.

FIG. 15 is an interaction flowchart of another communication method according to an embodiment of this application. A method procedure in FIG. 15 is an example of the method described in FIG. 11. FIG. 15 is an example procedure in which an LAF requests a node on which a blockchain enabler is deployed to set up a blockchain. As shown in FIG. 15, the method includes the following steps.

1501: The first node determines an attribute of the blockchain to be set up, generates a blockchain profile (BC profile), and determines a node included in the blockchain to be set up.

In a possible implementation, after determining, based on a requirement, the blockchain to be set up, the first node determines the attribute (a chain type, a topology structure, a P2P protocol, a consensus mechanism, an incentive mechanism, a wallet type, a transaction ledger format, a security algorithm, a smart contract, a trust credential, or the like) of the blockchain to be set up, and generates the blockchain profile. For example, the first node (for example, the LAF) receives a requirement from an upper-layer service, and determines to set up a blockchain, for example, including n UEs and m base stations. For example, if the requirement from the upper-layer service states that the blockchain requires a high security level, the LAF selects post-quantum cryptography as a security algorithm of the chain. If computational power of the selected UE is poor, the LAF determines to set the UE as a client. If computational power of the selected base station is strong, the LAF determines to set the base station as a full node. The LAF generates the blockchain profile based on the selected blockchain capability and the node, and sends the blockchain profile to the selected n UEs and m base stations. Step 1501 is optional, and the first node may obtain the blockchain profile in another manner. This is not limited in this application.

1502: The first node sends a blockchain setup request message to the second node.

Correspondingly, the second node receives the blockchain setup request (BC setup request) message from the first node.

The blockchain setup request message is for setting up the blockchain including the second node in a telecommunication network. In a possible implementation, the first node sends the blockchain setup request message to all nodes included in the blockchain to be set up, and the second node is one node in the blockchain to be set up.

The blockchain setup request message may be an example of the first message in FIG. 11. The blockchain setup request message carries the blockchain profile, and the blockchain profile is a profile of the blockchain including the second node. The blockchain profile may be for describing an algorithm used by a specific blockchain and related information of the blockchain. For example, the blockchain profile includes blockchain information and blockchain node information.

For example, the blockchain information includes one or more of the following:
a chain name/ID: for distinguishing different blockchains, where one node may belong to a plurality of chains;
a chain type: a consortium blockchain/a public blockchain/a private blockchain;
a topology structure used by the chain: a centralized/fully distributed/hybrid/layered structure;
a P2P protocol used by the chain: for example, a Gossip-based P2P protocol or a hash table-based P2P protocol;
a consensus mechanism used by the chain: one of PoW, PoS, DPoS, PBFT, or the like;
an incentive mechanism used by the chain: without incentive/with incentive;
a wallet type used by the chain: a digital currency/a virtual currency/no wallet;
a transaction/ledger format used by the chain: for example, whether to be editable, or whether privacy protection is provided;
a security algorithm used by the chain: for example, a hash algorithm, a signature algorithm, a transaction encryption algorithm, and a ledger encryption algorithm;
a smart contract used by the chain: for example, a built-in smart contract, and whether to allow development and upload of a new contract; and
a trust credential used by the chain: for example, a root certificate of the chain.

For example, the blockchain node information includes one or more of the following items of the one or more nodes: a node ID, an address, a type, and a role.

Node A: an ID of the node A, an address of the node A, a type of the node A, and a role of the node A.

Node B: an ID of the node B, an address of the node B, a type of the node B, and a role of the node B.

1503: The second node performs configuration based on the blockchain profile.

In a possible implementation, the second node invokes an algorithm specified in the blockchain profile, to run the BC enabler. If the blockchain profile requires to use a Gossip protocol, the Gossip is invoked for sending all transactions generated on the chain to all other nodes that can be connected to the same chain. If the blockchain profile specifies a security algorithm, the security algorithm is invoked for signing or encryption on all transactions generated on the chain. After the nodes included in the blockchain to be set up respectively perform operations similar to step 1503, the first node can set up one blockchain.

1504: The second node sends a blockchain setup response message to the first node.

Correspondingly, the first node receives the blockchain setup response (BC setup response) message from the second node. The blockchain setup response message may carry a result of setting up the blockchain by the second node, and the result is that the blockchain setup succeeds or fails.

In this embodiment of this application, the first node sends the blockchain setup request message to the second node, to request the second node to set up the blockchain. In this way, the blockchain can be set up in the telecommunication network.

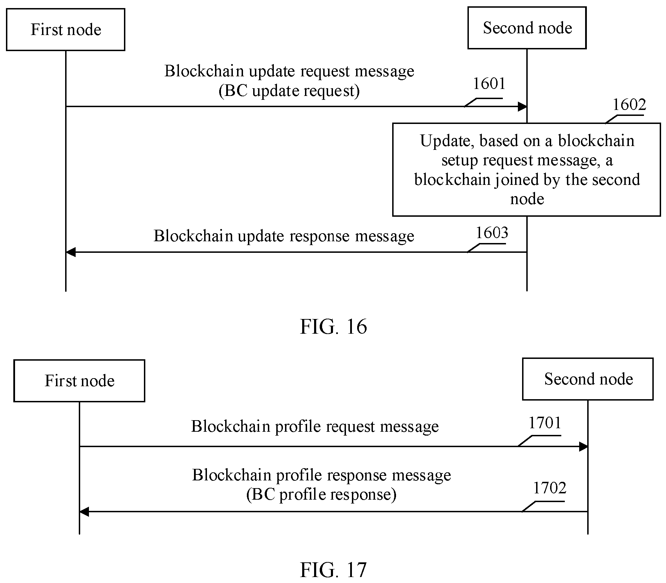

FIG. 16 is an interaction flowchart of another communication method according to an embodiment of this application. A method procedure in FIG. 16 is an example of the method described in FIG. 11. FIG. 16 is an example procedure in which an LAF requests a node on which a blockchain enabler is deployed to update a blockchain. The method procedure in FIG. 16 may be performed after the method procedure in FIG. 15. As shown in FIG. 16, the method includes the following steps.

1601: The first node sends a blockchain update request message to the second node.

Correspondingly, the second node receives the blockchain update request (BC update request) message from the first node. The blockchain update message is for updating the blockchain including the second node in a telecommunication network. In other words, the blockchain update message is used by the second node in the telecommunication network to update the blockchain joined by the second node. The blockchain update request message may be an example of the first message in FIG. 11. The blockchain update request message may carry the blockchain profile, and the blockchain profile may include an update profile of the blockchain joined by the second node. The blockchain profile may be for describing an algorithm used by a specific blockchain and related information of the blockchain. For the blockchain profile, refer to the descriptions of the blockchain profile in step 1502. Before performing step 1601, the first node may perform the following operations: The first node determines, based on a scenario change, a service change, or a requirement received from an upper-layer application, that the blockchain joined by the second node needs to be updated, and generates an updated blockchain profile.

1602: The second node updates, based on the blockchain setup request message, the blockchain joined by the second node.

That the second node updates, based on the blockchain setup request message, the blockchain joined by the second node may be updating blockchain information of the blockchain joined by the second node, for example, a chain name, a chain type, a topology structure used by the chain, and a wallet type used by the chain, or may be updating node information of the blockchain joined by the second node.

1603: The second node sends a blockchain update response message to the first node.

Correspondingly, the first node receives the blockchain update response (BC update response) message from the second node. The blockchain update response message may carry a result of updating, by the second node, the blockchain joined by the second node, and the result is that the blockchain joined by the second node is successfully updated or fails to be updated.

In this embodiment of this application, the first node sends the blockchain update request message to the second node, to request the second node to update the blockchain. In this way, the blockchain can be updated in the telecommunication network.

In the method procedure in FIG. 15, the blockchain setup request message carries the blockchain profile. In the method procedure in FIG. 16, the blockchain update request message also carries the blockchain profile. The blockchain profile may also be transmitted in a request, subscription, or notification manner. FIG. 17 shows an example procedure in which the blockchain profile is sent in a request manner. A method procedure in FIG. 17 is an example of the method described in FIG. 11. As shown in FIG. 17, the method includes the following steps.

1701: A first node sends a blockchain profile request message to a second node.

Correspondingly, the second node receives the blockchain profile request (BC profile request) message from the first node. For example, the first node is an LAF, the second node is a node or a sub LAF on which a blockchain enabler is deployed, the blockchain profile request message is for requesting a profile of a first blockchain, and the blockchain profile request message carries a name (name)/ID of the first blockchain.

1702: The second node sends a blockchain profile response message to the first node based on the blockchain profile request message.

Correspondingly, the first node receives the blockchain profile response (BC profile response) message from the second node. The blockchain profile response message may carry a blockchain profile (BC profile), and the blockchain profile includes the profile of the first blockchain.

In this embodiment of this application, the first node may actively obtain the profile of the blockchain by sending the blockchain profile request message to the second node.

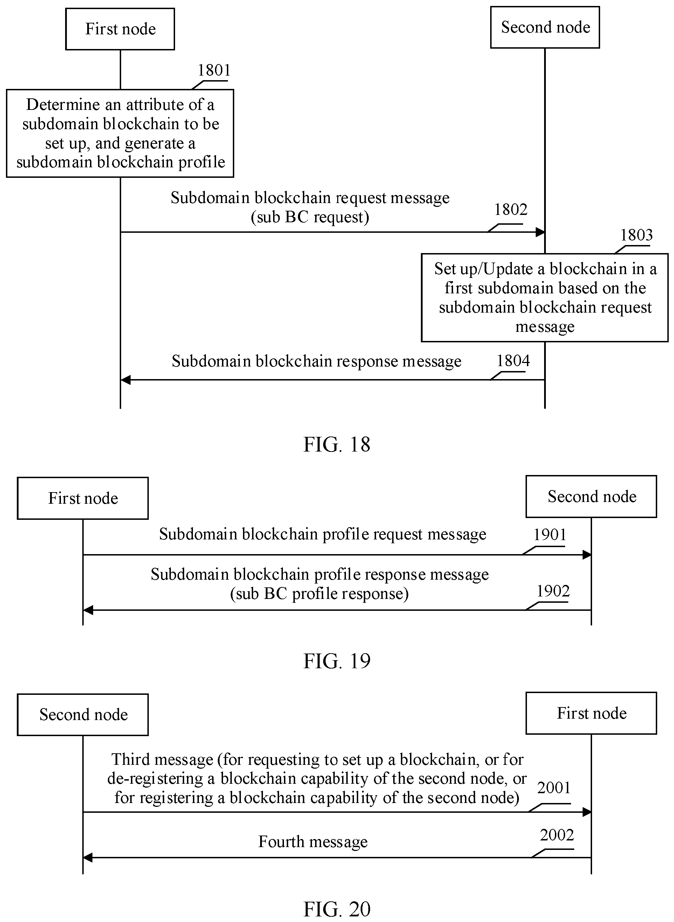

FIG. 18 is an interaction flowchart of another communication method according to an embodiment of this application. A method procedure in FIG. 18 is an example of the method described in FIG. 11. FIG. 18 is an example procedure in which an LAF requests a sub LAF to set up a subdomain blockchain (that is, a blockchain in a subdomain). As shown in FIG. 18, the method includes the following steps.

1801: A first node determines an attribute of a subdomain blockchain to be set up, and generates a subdomain blockchain profile.

In a possible implementation of Step 1801, after determining, based on a requirement, the subdomain blockchain to be set up, the first node determines the attribute (a chain type, a topology structure, a P2P protocol, a consensus mechanism, an incentive mechanism, a wallet type, a transaction ledger format, a security algorithm, a smart contract, a trust credential, a quantity of chain nodes, or the like) of the subdomain blockchain to be set up, and generates the subdomain blockchain profile. An example in which the first node determines, based on a requirement, the subdomain blockchain to be set up is as follows: An LAF receives a requirement (for example, node identity authentication or resource sharing is implemented by using a blockchain) of an upper-layer application, and the LAF determines to set up two blockchains on a subdomain network. The procedure for determining a parameter of each blockchain is similar to the foregoing procedure. A quantity of blockchain nodes may be determined with reference to registration information of the nodes when the nodes join the network and BC enablers of the nodes. Step 1801 is optional, and the first node may obtain a subdomain blockchain profile in another manner. This is not limited in this application.

1802: The first node sends a subdomain blockchain request message to a second node.

Correspondingly, the second node receives the subdomain blockchain request (sub BC request) message from the first node.

The subdomain blockchain request (sub BC request) message may include a subdomain blockchain setup request (sub BC setup request) message or a subdomain blockchain update request (sub BC update request) message.

For example, the first node is an LAF, and the second node is a sub LAF. The subdomain blockchain request message is for setting up/updating one or more blockchains in the first subdomain. In other words, the subdomain blockchain request message is used by the second node to set up/update one or more blockchains in the first subdomain. The first subdomain includes one or more nodes managed by the second node, and the second node is managed by the first node. For example, when the second node receives the subdomain blockchain request message for the first time (that is, no blockchain is set up in the subdomain associated with the second node), the subdomain blockchain request message is for setting up one or more blockchains in the first subdomain, and the first message carries a profile of the one or more blockchains. When the second node receives the subdomain blockchain request message not for the first time (that is, a blockchain has been set up in the subdomain associated with the second node), the subdomain blockchain request message is for updating one or more blockchains in the first subdomain, and the first message carries an update profile of the one or more blockchains. The subdomain blockchain request message may carry a subdomain blockchain profile (sub BC profile), and the subdomain blockchain profile includes a profile of the one or more blockchains in the first subdomain. The subdomain blockchain request message may be an example of the first message in FIG. 11. The subdomain blockchain profile may be used to describe information about all blockchains in the first subdomain. For example, the subdomain blockchain profile includes information about one or more blockchains (that is, one or more pieces of blockchain information) and node information of one or more blockchains, for example, a quantity of chain nodes (or more specifically, node type-node role-quantity).

1803: The second node sets up/updates a blockchain in the first subdomain based on the subdomain blockchain request message.

In a possible implementation, the second node determines, based on the subdomain blockchain profile carried in the subdomain blockchain request message, a node included in the blockchain to be set up, and performs the blockchain setup procedure shown in FIG. 15 with these nodes.

1804: The second node sends a subdomain blockchain response message to the first node.

Correspondingly, the first node receives the subdomain blockchain response (sub BC response) message from the second node. The subdomain blockchain response message may carry a result of setting up the blockchain by the second node, and the result is that the blockchain setup/updating succeeds or fails.

In this embodiment of this application, the first node sends the subdomain blockchain request message to the second node, to request the second node to set up the blockchain. In this way, the blockchain can be set up/updated in the subdomain in the telecommunication network.

In the method procedure in FIG. 18, the subdomain blockchain request message carries the subdomain blockchain profile (sub BC profile). The subdomain blockchain profile (sub BC profile) may alternatively be sent in a request, subscription, or notification manner. FIG. 19 shows an example procedure in which a subdomain blockchain profile is sent in a request manner. A method procedure in FIG. 19 is an example of the method described in FIG. 11. As shown in FIG. 19, the method includes the following steps.

1901: A first node sends a subdomain blockchain profile request message to a second node.

Correspondingly, the second node receives the subdomain blockchain profile request (sub BC profile request) message from the first node. For example, the first node is an LAF, and the second node is a sub LAF. The subdomain blockchain profile request message is for requesting a profile of a blockchain in a first subdomain managed by the second node. The subdomain blockchain profile request message carries an ID of the first subdomain and/or names/IDs of a plurality of blockchains in the first subdomain.

1902: The second node sends a subdomain blockchain profile response message to the first node based on the subdomain blockchain profile request message.

Correspondingly, the first node receives the subdomain blockchain profile response (sub BC profile response) message from the second node. The subdomain blockchain profile response message may carry the subdomain blockchain profile (sub BC profile). For example, when the subdomain blockchain profile request message carries the ID of the first subdomain, the subdomain blockchain profile (sub BC profile) includes a profile of each blockchain in the first subdomain. For example, when the subdomain blockchain profile request message carries a name/an ID of one or more blockchains in the first subdomain, the subdomain blockchain profile (sub BC profile) includes the profile of the one or more blockchains.

In this embodiment of this application, the first node may actively obtain the profile of the blockchain in the subdomain by sending the subdomain blockchain profile request message to the second node.

The foregoing FIG. 11 to FIG. 19 describe a method procedure in which the first node actively sends a message to the second node, and can implement at least one of blockchain capability management, blockchain capability deployment, blockchain setup, blockchain removal, blockchain updating, blockchain configuration, blockchain parameter obtaining, subdomain blockchain deployment, or subdomain blockchain configuration. The following describes a method procedure in which a second node actively sends a message to a first node, so that requesting to set up a blockchain, registering a blockchain capability, or de-registering a blockchain capability can be implemented. FIG. 20 is an interaction flowchart of another communication method according to an embodiment of this application. As shown in FIG. 20, the method includes the following steps.

2001: A second node sends a third message to a first node.

Correspondingly, the first node receives the third message from the second node. The second node is a sub LAF or a node on which a blockchain enabler is deployed, and the first node is an LAF. The third message is for requesting to set up a blockchain, and the third message carries a blockchain service requirement parameter. Alternatively, the third message is for de-registering a blockchain capability of the second node. Alternatively, the third message is for registering a blockchain capability of the second node. A protocol used by the second node to send the third message to the first node may be the same as the protocol used by the first node to send the first message to the second node in FIG. 11. Details are not described herein again.

For example, when the first node is a core network element, the second node may send the third message to the first node by using a first blockchain control protocol; or when a first node is an access network device, the second node may send the third message to the first node by using a second blockchain control protocol, where the second blockchain control protocol is different from the first blockchain control protocol.

2002: The first node sends a fourth message to the second node based on the third message.

The fourth message is for responding to the third message. For example, the third message is for requesting to set up a blockchain, and the fourth message indicates that the first node accepts or rejects the request of the second node for setting up the blockchain. For example, the third message is for registering the blockchain capability of the second node, and the fourth message indicates that the second node successfully registers or fails to register the blockchain capability. For example, the third message is for de-registering the blockchain capability of the second node, and the fourth message indicate that the second node successfully de-registers or fails to de-register the blockchain capability.

In this embodiment of this application, the second node sends the third message to the first node, so that requesting to set up the blockchain, registering the blockchain capability, or de-registering the blockchain capability can be implemented in a telecommunication network.

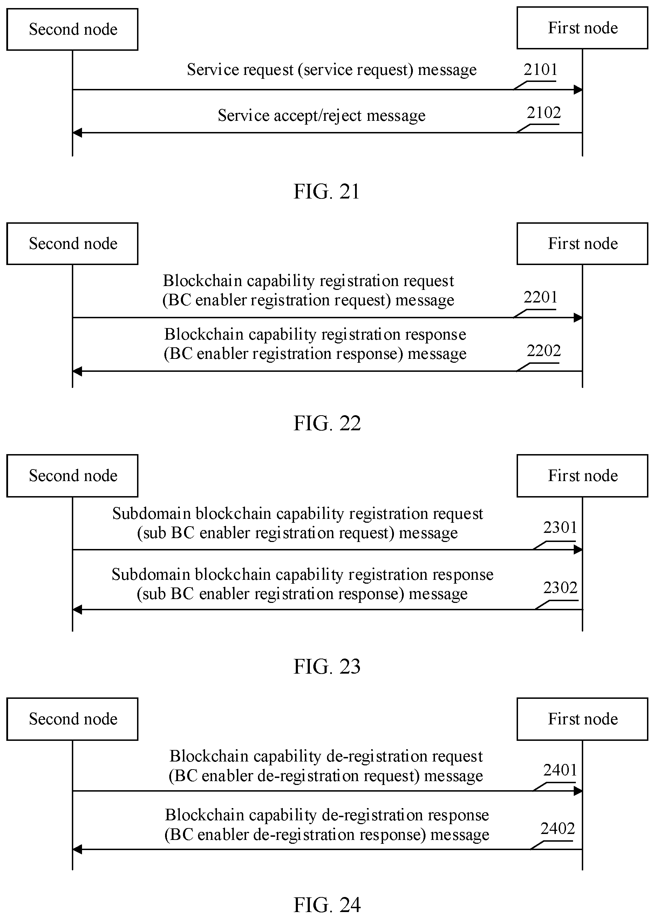

FIG. 21 is an interaction flowchart of another communication method according to an embodiment of this application. A method procedure in FIG. 21 is an example of the method described in FIG. 20. FIG. 21 is an example procedure in which a second node requests to set up a blockchain from a first node. As shown in FIG. 21, the method includes the following steps.

2101: The second node sends a service request message (service request) to the first node.

Correspondingly, the first node receives the service request message from the second node. The service request message is an example of the third message in FIG. 20. The service request message requests to set up a blockchain, and the third message carries a blockchain service requirement parameter. For example, the second node is a terminal device, the first node is an LAF, and the service request message in step 2101 is a service request message in a NAS protocol, where a service type of the blockchain is added to a service type (service type) information element of the service request message in the NAS protocol, and the blockchain service requirement parameter is added. An objective of a service request procedure of the NAS protocol is that a terminal device requests a service from a core network.

2102: The first node sends a service accept/reject message to the second node based on the service request message.

Correspondingly, the second node receives the service accept/reject message from the first node. The service accept message indicates that the first node accepts the request of the second node for setting up the blockchain. The service reject message indicates that the first node rejects the request of the second node for setting up the blockchain.

In this embodiment of this application, the second node sends the service request message to the first node, to request to set up the blockchain in a telecommunication network.

FIG. 22 is an interaction flowchart of another communication method according to an embodiment of this application. A method procedure in FIG. 22 is an example of the method described in FIG. 20. FIG. 22 is an example procedure of registering a blockchain capability by a second node. As shown in FIG. 22, the method includes the following steps.

2201: The second node sends a blockchain capability registration request message to a first node.

Correspondingly, the first node receives the blockchain capability registration request (BC enabler registration request) message from the second node. The blockchain capability registration request message is for registering the blockchain capability of the second node. The blockchain capability registration request message is an example of the third message in FIG. 20. The blockchain capability registration request message may carry a blockchain enabler profile (that is, a BC enabler profile). For the blockchain enabler profile, refer to the descriptions of the blockchain enabler profile in step 1202. Details are not described herein again.

In an existing 5G network, when a UE joins a network, the UE needs to register with a core network. Similarly, in this embodiment of this application, when a node having a specific blockchain capability joins a network, the node may register with an LAF. The method procedure shown in FIG. 12 provides a method for an LAF to deploy a blockchain capability (BC enabler) to a node, and registration means that the node sends a blockchain enabler profile (that is, BC enabler profile) to the LAF. A possible scenario that requires registration may be as follows: A blockchain enabler of a specific node is configured by an LAF 1, the LAF 1 stores a blockchain enabler profile, the node subsequently exits the network, and performs a de-registration procedure with the LAF 1; and the node joins a new network, and performs a registration procedure with an LAF 2.

2202: The first node sends a blockchain capability registration response message to the second node.

Correspondingly, the second node receives the blockchain capability registration response (BC enabler registration response) message from the first node. The blockchain capability registration response message carries a result of registering the blockchain capability by the second node.

In this embodiment of this application, the second node sends the blockchain capability registration request message to the first node, so that the blockchain capability can be registered in the telecommunication network.

FIG. 23 is an interaction flowchart of another communication method according to an embodiment of this application. A method procedure in FIG. 23 is an example of the method described in FIG. 20. FIG. 23 is an example procedure of registering a blockchain capability in a subdomain. As shown in FIG. 23, the method includes the following steps.

2301: A second node sends a subdomain blockchain capability registration request message to a first node.

Correspondingly, the first node receives the subdomain blockchain capability registration request (sub BC enabler registration request) message from the second node. The subdomain blockchain capability registration request message is for registering a blockchain capability of a node in the subdomain managed by the second node. The subdomain blockchain capability registration request message is an example of the third message in FIG. 20. The subdomain blockchain capability registration request message may carry a subdomain blockchain enabler profile (that is, a sub BC enabler profile). For the subdomain blockchain enabler profile, refer to the descriptions of the subdomain blockchain enabler profile in step 1302. Details are not described herein again.

2302: The first node sends a subdomain blockchain capability registration response message to the second node.

Correspondingly, the second node receives the subdomain blockchain capability registration response (sub BC enabler registration response) message from the first node. The subdomain blockchain capability registration response message carries a result of registering, by the second node, the blockchain capability of the node in the subdomain managed by the second node.

In this embodiment of this application, the second node sends the subdomain blockchain capability registration request message to the first node, so that the blockchain capability of the node in the subdomain can be registered in the telecommunication network.

FIG. 24 is an interaction flowchart of another communication method according to an embodiment of this application. A method procedure in FIG. 24 is an example of the method described in FIG. 20. FIG. 24 is an example procedure of de-registering a blockchain capability by a second node. As shown in FIG. 24, the method includes the following steps.

2401: The second node sends a blockchain capability de-registration request message to a first node.

Correspondingly, the first node receives the blockchain capability de-registration request (BC enabler de-registration request) message from the second node. The blockchain capability de-registration request message is for de-registering the blockchain capability of the second node. The blockchain capability de-registration request message is an example of the third message in FIG. 20. The blockchain capability de-registration request message may carry identity information of the second node. For a blockchain enabler profile, refer to the descriptions of the blockchain enabler profile in step 1202. Details are not described herein again.

A scenario in which a blockchain capability needs to be de-registered may be as follows: A blockchain enabler of a specific node is configured by an LAF 1, the LAF 1 stores a blockchain enabler profile, and the node subsequently exits the network and performs a de-registration procedure with the LAF 1.

2402: The first node sends a blockchain capability de-registration response message to the second node.

Correspondingly, the second node receives the blockchain capability de-registration response (BC enabler de-registration response) message from the first node. The blockchain capability registration response message carries a result of de-registering the blockchain capability by the second node.

In this embodiment of this application, the second node sends the blockchain capability de-registration request message to the first node, so that the blockchain capability can be de-registered in the telecommunication network.

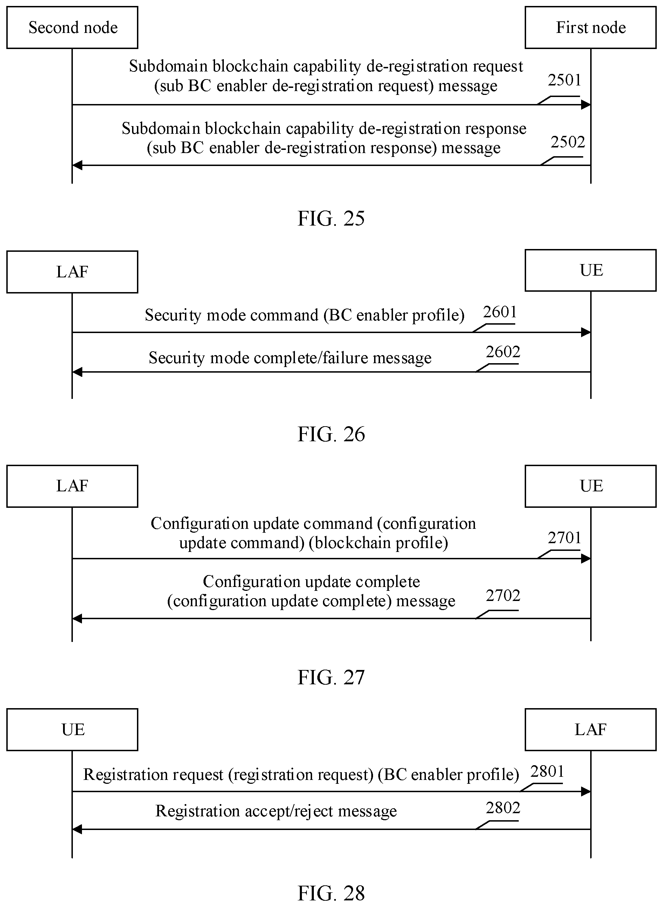

FIG. 25 is an interaction flowchart of another communication method according to an embodiment of this application. A method procedure in FIG. 25 is an example of the method described in FIG. 20. FIG. 25 is an example procedure of de-registering a blockchain capability of a node in a subdomain by a sub LAF. As shown in FIG. 25, the method includes the following steps.

2501: A second node sends a subdomain blockchain capability de-registration request message to a first node.

Correspondingly, the first node receives the subdomain blockchain capability de-registration request (sub BC enabler de-registration request) message from the second node. The second node is a sub LAF, and the first node is an LAF. The subdomain blockchain capability de-registration request message is for de-registering the blockchain capability of the node in the subdomain managed by the second node. The subdomain blockchain capability de-registration request message is an example of the third message in FIG. 20. In a possible implementation, the subdomain blockchain capability de-registration request message may carry identity information of the second node, and the subdomain blockchain capability de-registration request message is for de-registering blockchain capabilities of all nodes in the subdomain managed by the second node. In a possible implementation, the subdomain blockchain capability de-registration request message may carry identity information of the second node and an identity of one or more nodes in the subdomain managed by the second node, and the subdomain blockchain capability de-registration request message is for de-registering a blockchain capability of the one or more nodes. For a subdomain blockchain enabler profile, refer to the descriptions of the subdomain blockchain enabler profile in step 1302. Details are not described herein again.

2502: The first node sends a subdomain blockchain capability de-registration response message to the second node.

Correspondingly, the second node receives the subdomain blockchain capability de-registration response (sub BC enabler de-registration response) message from the first node. The subdomain blockchain capability de-registration response message carries a result of de-registering, by the second node, the blockchain capability of the node in the subdomain managed by the second node.

In this embodiment of this application, the second node sends the subdomain blockchain capability de-registration request message to the first node, so that the blockchain capability of the node in the subdomain can be de-registered in the telecommunication network.

FIG. 9 shows an example of a protocol stack in which a node in a telecommunication network reuses an existing protocol to implement a blockchain control function (which may include a blockchain management function). The existing NAS protocol, RRC protocol, XnAP, and NGAP do not support the blockchain control function (which may include the blockchain management function). The following describes examples of modifying the NAS protocol, the RRC protocol, the XnAP protocol, and the NGAP protocol in this application, so that these protocols support the blockchain control function (which may include the blockchain management function).

The NAS protocol is modified as follows:

### (1) UE blockchain capability enabling

An objective of a security mode command (security mode command) procedure of the NAS protocol is to determine a security algorithm used between a UE and a core network. For a network that evolves from 5G, a blockchain capability is one of security technologies, and the blockchain capability may be included in the selected security algorithm. Therefore, in this application, a blockchain enabler profile (BC enabler profile) may be added to a Selected NAS security algorithms information element, so that an LAF enables a blockchain capability of the UE. FIG. 26 is an interaction flowchart of another communication method according to an embodiment of this application. FIG. 25 is an example procedure in which an LAF enables a blockchain capability of a UE by reusing an existing protocol. A method procedure in FIG. 26 is an example of the method described in FIG. 11. As shown in FIG. 26, the method includes the following steps.

2601: The LAF sends a security mode command to the UE.

Correspondingly, the UE receives the security mode command from the LAF. The LAF is an example of the first node in FIG. 11, and the UE is an example of the second node in FIG. 11. A blockchain enabler profile (BC enabler profile) is included in a Selected NAS security algorithms information element in the security mode command. The profile is for enabling a blockchain capability of the UE.

2602: The UE sends a security mode complete/failure message to the LAF.

Correspondingly, the LAF receives the security mode complete/failure message from the UE. The security mode complete message indicates that the UE successfully enables the blockchain capability. The security mode failure message indicates that the UE does not successfully enable the blockchain capability.

In this embodiment of this application, the LAF enables the blockchain capability of the UE by reusing the existing protocol. This introduces a small network change, high compatibility, and low implementation complexity.

### (2) UE blockchain capability management

An objective of a NAS protocol configuration (Configuration) procedure is to configure a capability of the UE. In this application, a blockchain profile, for example, the foregoing transaction/ledger format, P2P protocol, consensus mechanism, and security algorithm, may be added to a UE security header type information element, so that an LAF manages a BC capability of a UE. FIG. 27 is an interaction flowchart of another communication method according to an embodiment of this application. FIG. 27 is an example procedure in which an LAF manages a blockchain capability of a UE by reusing an existing protocol. A method procedure in FIG. 27 is an example of the method described in FIG. 11. As shown in FIG. 27, the method includes the following steps.

2701: The LAF sends a configuration update command to the UE.

Correspondingly, the UE receives the configuration update command (configuration update command) from the LAF. The LAF is an example of the first node in FIG. 11, and the UE is an example of the second node in FIG. 11. A UE security header type information element in the configuration update command includes a part or all of a blockchain profile (or a parameter of a blockchain capability, a BC enabler profile), and the profile is for managing (or configuring) the blockchain capability of the UE.

2702: The UE sends a configuration update complete message to the LAF.

Correspondingly, the LAF receives the configuration update complete (configuration update complete) message from the UE. The configuration update complete message indicates that the UE completes configuring the blockchain capability.

In this embodiment of this application, the LAF manages the blockchain capability of the UE by reusing the existing protocol. This introduces a small network change, high compatibility, and low implementation complexity.

### (3) Requesting by a UE to set up a blockchain

An objective of a service request (Service request) procedure of the NAS protocol is that a UE requests a service from a core network. In this application, a blockchain service type may be added to a service type information element of the service request, and a blockchain service requirement parameter is added, so that the UE requests an LAF to set up a blockchain. Refer to FIG. 21. For a procedure in which the LAF sets up the blockchain, refer to the method procedure in FIG. 15. The LAF is an example of the first node in FIG. 15, and the UE is an example of the second node in FIG. 15.

### (4) UE blockchain capability registration

An objective of a registration request (registration request) procedure of the NAS protocol is that a UE registers with a core network when joining a network. In this application, a blockchain enabler profile (BC enabler profile) may be added to a UE security capability information element of a registration request, thereby registering a blockchain capability of the UE with an LAF. FIG. 28 is an interaction flowchart of another communication method according to an embodiment of this application. FIG. 28 is an example procedure of registering a blockchain capability of a UE with an LAF by reusing an existing protocol. A method procedure in FIG. 28 is an example of the method described in FIG. 20. As shown in FIG. 28, the method includes the following steps.

2801: The UE sends a registration request to the LAF.

Correspondingly, the LAF receives the registration request from the UE. The UE is an example of the second node in FIG. 20, and the LAF is an example of the first node in FIG. 20. A UE security capability information element in the registration request includes a blockchain enabler profile (BC enabler profile), and the profile is for registering the blockchain capability of the UE with the LAF.

2802: The LAF sends a registration accept/reject message to the UE.

Correspondingly, the UE receives the registration accept/reject message from the LAF. The registration accept message indicates that the LAF accepts registration of the UE, and the registration reject message indicates that the LAF rejects registration of the UE.

In this embodiment of this application, the blockchain capability of the UE is registered with the LAF by reusing an existing protocol. This introduces a small network change, high compatibility, and low implementation complexity.

The RRC protocol is modified as follows:

### (1) UE blockchain capability enabling

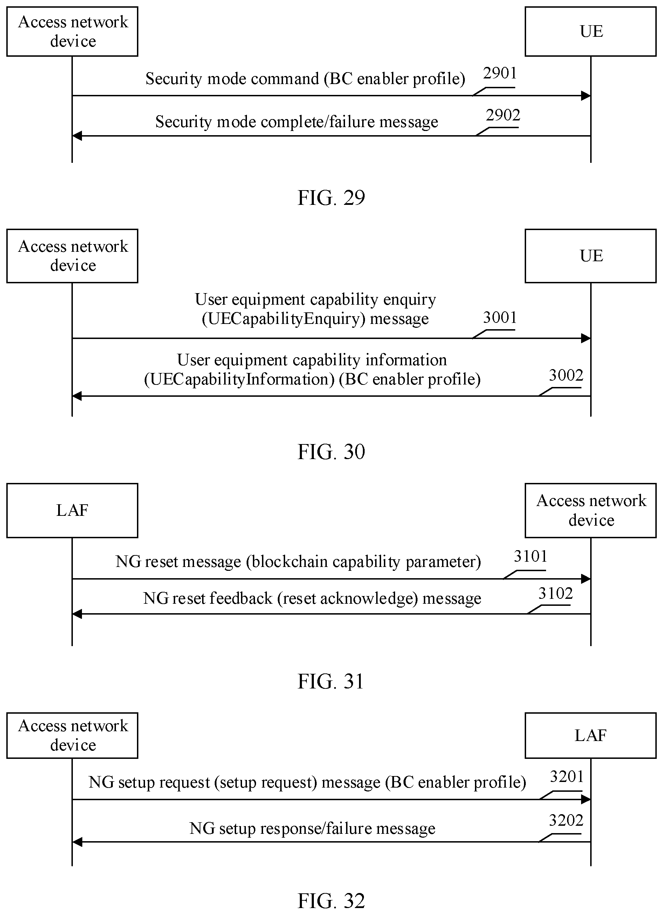

An objective of a security mode command (security mode command) procedure of the RRC protocol is, similar to that of the NAS, to determine a security algorithm used between a UE and an access network. In this application, a part or all of a blockchain enabler profile (BC enabler profile) may be added to the security mode command, so that an LAF in the access network enables a blockchain capability of a UE. FIG. 29 is an interaction flowchart of another communication method according to an embodiment of this application. FIG. 29 is an example procedure in which an LAF enables a blockchain capability of a UE by reusing an existing protocol. A method procedure in FIG. 29 is an example of the method described in FIG. 11. As shown in FIG. 29, the method includes the following steps.

2901: An access network device sends a security mode command to the UE.

Correspondingly, the UE receives the security mode command from the access network device. The access network device is an example of the first node in FIG. 11, and the UE is an example of the second node in FIG. 11. The security mode command includes a part or all of a blockchain enabler profile (BC enabler profile), and the profile is for enabling the blockchain capability of the UE.

2902: The UE sends a security mode complete/failure message to the access network device.

Correspondingly, the access network device receives the security mode complete/failure message from the UE. The security mode complete message indicates that the UE successfully enables the blockchain capability. The security mode failure message indicates that the UE does not successfully enable the blockchain capability.

In this embodiment of this application, the blockchain capability of the UE is enabled by reusing the existing protocol. This introduces a small network change, high compatibility, and low implementation complexity.

### (2) UE blockchain capability information request

A user equipment capability enquiry (UECapabilityEnquiry) procedure in the RRC protocol is that an access network device (for example, a base station) requests to obtain capability information of a UE. In this application, a part or all of a blockchain enabler profile (BC enabler profile) may be added to user equipment capability information (UECapabilityInformation), so that the UE reports blockchain capability information to an LAF in an access network. FIG. 30 is an interaction flowchart of another communication method according to an embodiment of this application. FIG. 29 is an example procedure in which a UE reports blockchain capability information to an LAF by reusing an existing protocol. A method procedure in FIG. 30 is an example of the method described in FIG. 11. As shown in FIG. 30, the method includes the following steps.

3001: An access network device sends a user equipment capability enquiry message to the UE.

Correspondingly, the UE receives the user equipment capability enquiry message from the access network device. The access network device is an example of the first node in FIG. 11, and the UE is an example of the second node in FIG. 11. The user equipment capability enquiry message is for requesting (or indicating) the UE to report the blockchain capability information of the UE.

3002: The UE sends user equipment capability information to the access network device.

Correspondingly, the access network device receives the user equipment capability information from the UE. The user equipment capability information (UECapabilityInformation) includes a part or all of a blockchain enabler profile (BC enabler profile), and the profile is used by the UE to report the blockchain capability information to the LAF in an access network.

In this embodiment of this application, the UE reports the blockchain capability information to the LAF by reusing an existing protocol. This introduces a small network change, high compatibility, and low implementation complexity.

The NGAP protocol is modified as follows:

### (1) Configuration of a blockchain capability of an access network device

An objective of an NG reset (RESET) procedure of the NGAP protocol is to configure an interface. In this application, a blockchain capability parameter, for example, the foregoing transaction/ledger format, P2P protocol, consensus mechanism, and security algorithm, may be added to an NG reset message, so that an LAF configures a blockchain capability of an access network device. FIG. 31 is an interaction flowchart of another communication method according to an embodiment of this application. FIG. 31 is an example flowchart of implementing blockchain capability configuration of an access network device by reusing an existing protocol. A method procedure in FIG. 31 is an example of the method described in FIG. 11. As shown in FIG. 31, the method includes the following steps.

3101: An LAF sends an NG reset message to the access network device.

Correspondingly, the LAF receives the NG reset message from the access network device. The LAF is an example of the first node in FIG. 11, and the access network device is an example of the second node in FIG. 11. The NG reset message is for blockchain capability configuration of the access network device. The NG reset message includes a capability parameter of a blockchain (or a blockchain capability parameter). For example, the NG reset message includes a part or all of a blockchain enabler profile (BC enabler profile).

3102: The access network device sends an NG reset feedback message to the LAF.

Correspondingly, the LAF receives the NG reset feedback (reset acknowledge) message from the access network device. The NG reset feedback message indicates that the blockchain capability is successfully or not successfully configured for the access network device.

In this embodiment of this application, the blockchain capability of the access network device is configured by reusing an existing protocol. This introduces a small network change, high compatibility, and low implementation complexity.

### (2) Registration of a blockchain capability of an access network device

An objective of an NG setup request (setup request) procedure of the NGAP protocol is to set up an interface, so that an access network device sends information to a core network. In this application, a blockchain enabler profile (BC enabler profile) may be added to an NG setup request message, to register a blockchain capability of the access network device with an LAF in the core network. FIG. 32 is an interaction flowchart of another communication method according to an embodiment of this application. FIG. 32 is an example procedure of registering a blockchain capability of an access network device with an LAF in a core network by reusing an existing protocol. A method procedure in FIG. 32 is an example of the method described in FIG. 20. As shown in FIG. 32, the method includes the following steps.

3201: The access network device sends an NG setup request message to the LAF.

Correspondingly, the LAF receives the NG setup request message from the access network device. The access network device is an example of the second node in FIG. 20, and the LAF is an example of the first node in FIG. 20. The NG setup request message includes a blockchain enabler profile (BC enabler profile), and the message is for registering the blockchain capability of the access network device with the LAF in the core network.

3202: The LAF sends an NG setup response/failure message to the access network device.

Correspondingly, the access network device receives the NG setup response/failure message from the LAF. The NG setup response message indicates that the access network device successfully registers the blockchain capability. The NG setup failure message indicates that the access network device does not successfully register the blockchain capability.

In this embodiment of this application, the blockchain capability of the access network device is registered with the LAF in the core network by reusing an existing protocol. This introduces a small network change, high compatibility, and low implementation complexity.

### (3) Notification of a blockchain capability of an access network device

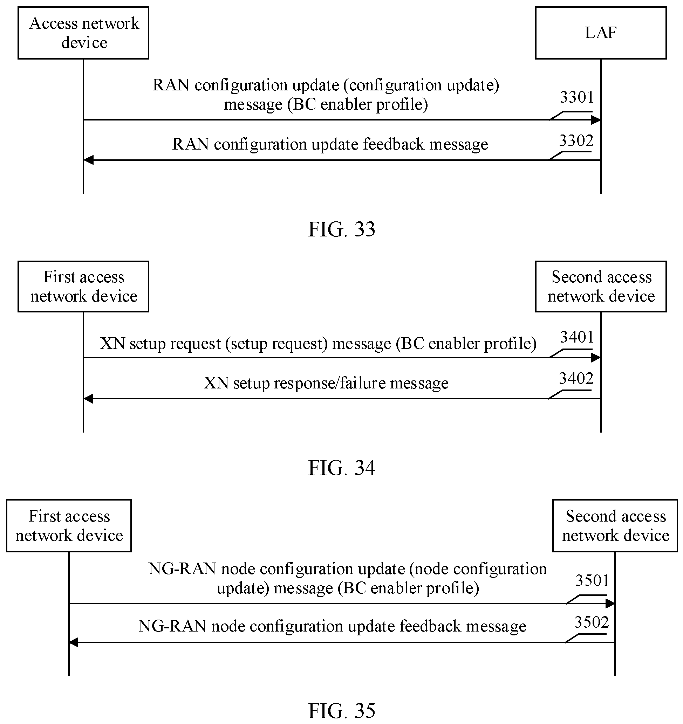

An objective of a RAN configuration update (configuration update) procedure of the NGAP protocol is that an access network device (for example, a base station) notifies a core network of updated information of the access network device. In this application, a blockchain enabler profile (BC enabler profile) may be added to a RAN configuration update message, so that an access network device on which an LAF is deployed is notified (or informed) of a blockchain capability of the access network device. FIG. 33 is an interaction flowchart of another communication method according to an embodiment of this application. FIG. 33 is an example procedure of notifying an LAF in a core network of a blockchain capability of an access network device by reusing an existing protocol. A method procedure in FIG. 33 is an example of the method described in FIG. 20. As shown in FIG. 33, the method includes the following steps.

3301: The access network device sends a RAN configuration update message to the LAF.

Correspondingly, the LAF receives the RAN configuration update message from the access network device. The access network device is an example of the second node in FIG. 20, and the LAF is an example of the first node in FIG. 20. The RAN configuration update message includes a blockchain enabler profile (BC enabler profile), and the message is for notifying the LAF of the blockchain capability of the access network device.

3302: The LAF sends a RAN configuration update feedback message to the access network device.

Correspondingly, the access network device receives the RAN configuration update feedback message from the LAF. The RAN configuration update feedback message indicates that the LAF receives the RAN configuration update feedback message sent by the access network device.

In this embodiment of this application, the LAF in the core network is notified of the blockchain capability of the access network device by reusing an existing protocol. This introduces a small network change, high compatibility, and low implementation complexity.

The XnAP protocol is modified as follows:

### (1) Registration of a blockchain capability of an access network device

An objective of an Xn setup request (setup request) procedure of the XnAP protocol is to set up an interface, and an access network device sends information about the access network device itself to another access network device. In this application, a blockchain enabler profile (BC enabler profile) may be added to an Xn setup request message, to register a blockchain capability of the access network device with an LAF in an access network. FIG. 34 is an interaction flowchart of another communication method according to an embodiment of this application. FIG. 34 is an example procedure of registering a blockchain capability of an access network device with an LAF in a core network by reusing an existing protocol. A method procedure in FIG. 34 is an example of the method described in FIG. 20. As shown in FIG. 34, the method includes the following steps.

3401: A first access network device sends an Xn setup request message to a second access network device.

Correspondingly, the second access network device receives the Xn setup request message from the first access network device. The first access network device is an example of the second node in FIG. 20, and the second access network device is an example of the first node in FIG. 20. In other words, an LAF is deployed on the second access network device. The Xn setup request message is for registering a blockchain capability of the first access network device with the LAF in an access network. The Xn setup request message may include a blockchain enabler profile (BC enabler profile).

3402: The second access network device sends an Xn setup response/failure message to the first access network device.

Correspondingly, the first access network device receives the Xn setup response/failure message from the second access network device. The Xn setup response message indicates at least that the first access network device successfully registers the blockchain capability. The Xn setup failure message indicates that the registration fails.

In this embodiment of this application, the blockchain capability of the access network device is registered with the LAF in the access network by reusing an existing protocol. This introduces a small network change, high compatibility, and low implementation complexity.

### (2) Notification of blockchain capability information of an access network device

An objective of an NG-RAN node configuration update (node configuration update) procedure of the XnAP protocol is that an access network device notifies another access network device of updated information of the access network device itself. In this application, a blockchain enabler profile (BC enabler profile) may be added to an NG-RAN node configuration update message, so that an LAF in a core network is notified of the blockchain capability information of the access network device. FIG. 35 is an interaction flowchart of another communication method according to an embodiment of this application. FIG. 35 is an example procedure of notifying an LAF in an access network of a blockchain capability of an access network device by reusing an existing protocol. A method procedure in FIG. 35 is an example of the method described in FIG. 20. As shown in FIG. 35, the method includes the following steps.

3501: A first access network device sends an NG-RAN node configuration update message to a second access network device.

Correspondingly, the second access network device receives the NG-RAN node configuration update message from the first access network device. The first access network device is an example of the second node in FIG. 20, and the second access network device is an example of the first node in FIG. 20. In other words, an LAF is deployed on the second access network device. The NG-RAN node configuration update message is for notifying the LAF in the access network of blockchain capability information of the access network device. The NG-RAN node configuration update message may include a blockchain enabler profile (BC enabler profile).

3502: The second access network device sends an NG-RAN node configuration update feedback message to the first access network device.

Correspondingly, the first access network device receives the NG-RAN node configuration update feedback (node configuration update acknowledge) message from the second access network device. The NG-RAN node configuration update feedback message indicates that the second access network device receives the NG-RAN node configuration update message from the first access network device.

In this embodiment of this application, an LAF in a core network is notified of the blockchain capability information of the access network device by reusing an existing protocol. This introduces a small network change, high compatibility, and low implementation complexity.

In addition, new signaling procedures need to be added for other blockchain functions, such as chain setup, chain removal, and chain updating; BC configuration; blockchain profile (BC profile) request, subscription, and notification; and blockchain enabler profile (BC enabler profile) request, subscription, and notification.

The following describes, with reference to the accompanying drawings, structures of communication apparatuses that can implement the communication methods provided in embodiments of this application. The following briefly describes only the communication apparatuses. For details about solution implementation, refer to the descriptions in the foregoing method embodiments. Details are not described below again.

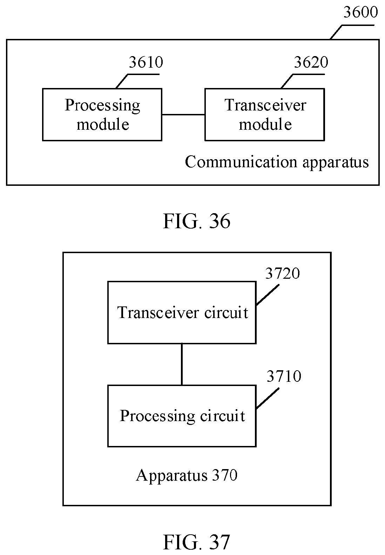

FIG. 36 is a diagram of a structure of a communication apparatus 3600 according to an embodiment of this application. The communication apparatus 3600 may correspondingly implement functions or steps implemented by the first node in the foregoing method embodiments, or may correspondingly implement functions or steps implemented by the second node in the foregoing method embodiments. The communication apparatus may include a processing module 3610 and a transceiver module 3620. In a possible implementation, the communication apparatus may further include a storage unit. The storage unit may be configured to store instructions (code or a program) and/or data. The processing module 3610 and the transceiver module 3620 may be coupled to the storage unit. For example, the processing module 3610 may read the instructions (the code or the program) and/or the data in the storage unit, to implement a corresponding method. The foregoing units may be independently disposed, or may be partially or completely integrated. For example, the transceiver module 3620 may include a sending module and a receiving module. The sending module may be a transmitter, and the receiving module may be a receiver. An entity corresponding to the transceiver module 3620 may be a transceiver circuit, for example, a transceiver or a communication interface.

In some possible implementations, the communication apparatus 3600 can correspondingly implement behavior and functions of the first node in the foregoing method embodiments. For example, the communication apparatus 3600 may be the first node, or may be a component (for example, a chip or a circuit) used in the first node. For example, the transceiver module 3620 may be configured to perform all receiving/sending operations performed by the first node in the embodiments in FIG. 11 to FIG. 25. For example, the processing module 3610 may be configured to perform all operations other than the sending/receiving operations performed by the first node in the embodiments in FIG. 11 to FIG. 25.

In some possible implementations, the communication apparatus 3600 can correspondingly implement behavior and functions of the second node in the foregoing method embodiments. For example, the communication apparatus 3600 may be the second node, or may be a component (for example, a chip or a circuit) used in the second node. For example, the transceiver module 3620 may be configured to perform all receiving/sending operations performed by the second node in the embodiments in FIG. 11 to FIG. 25. For example, the processing module 3610 may be configured to perform all operations other than the sending/receiving operations performed by the second node in the embodiments in FIG. 11 to FIG. 25.

FIG. 37 is a diagram of a structure of another apparatus 370 according to an embodiment of this application. The apparatus in FIG. 37 may be the first node or a chip used in the first node, or may be the second node or a chip used in the second node. As shown in FIG. 37, the apparatus 370 includes a processing circuit 3710 and a transceiver circuit 3720.

In some embodiments of this application, the processing circuit 3710 and the transceiver circuit 3720 may be configured to perform a function, an operation, or the like performed by the first node. For example, the transceiver circuit 3720 is configured to perform all receiving/sending operations performed by the first node in the embodiments in FIG. 11 to FIG. 25. For example, the processing circuit 3710 may be configured to perform all operations other than the sending/receiving operations performed by the first node in the embodiments in FIG. 11 to FIG. 25.

In some embodiments of this application, the processing circuit 3710 and the transceiver circuit 3720 may be configured to perform a function, an operation, or the like performed by the second node. For example, the transceiver circuit 3720 is configured to perform all receiving/sending operations performed by the second node in the embodiments in FIG. 11 to FIG. 25. For example, the processing circuit 3710 may be configured to perform all operations other than the sending/receiving operations performed by the second node in the embodiments in FIG. 11 to FIG. 25.

In a possible implementation, the transceiver circuit 3720 includes at least one transceiver, and the processing circuit 3710 includes at least one processor or a circuit that is in at least one processor and that is used for processing or control.

The transceiver is configured to communicate with another device/apparatus through a transmission medium. The processor sends/receives data and/or signaling through the transceiver, and is configured to implement the methods in the foregoing method embodiments. The processor may implement a function of the processing module 3610, and the transceiver may implement a function of the transceiver module 3620. Optionally, the transceiver may include a radio frequency circuit and an antenna. The radio frequency circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user and output data to the user.

Optionally, the apparatus 370 may further include at least one memory, configured to store program instructions and/or data. The memory is coupled to the processor. The coupling in this embodiment of this application may be an indirect coupling or a communication connection between apparatuses, units, or modules in an electrical form, a mechanical form, or another form, and is used for information exchange between the apparatuses, the units, or the modules. The processor may operate in collaboration with the memory. The processor may execute the program instructions stored in the memory. At least one of the at least one memory may be included in the processor.

The processor may read a software program in the memory, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the apparatus 370, the radio frequency circuit receives a radio frequency signal through the antenna, converts the radio frequency signal into a baseband signal, and outputs the baseband signal to the processor; and the processor converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the apparatus 370.

A specific connection medium between the transceiver, the processor, and the memory is not limited in this embodiment of this application.

In this embodiment of this application, the processor may be one of the following components: a general-purpose processor, a digital signal processor, an application-specific integrated circuit, a field-programmable gate array or another programmable logic device, a discrete gate or a transistor logic device, a discrete hardware component, or all or a part of circuits used for processing functions in the foregoing components. The processor may implement or perform the methods, the steps, and the logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In a possible implementation, the processing circuit 3710 includes at least one logic circuit, and the transceiver circuit 3720 includes at least one interface. The processing module 3610 in FIG. 36 may be implemented by using a logic circuit, and the transceiver module 3620 in FIG. 36 may be implemented by using an interface. The logic circuit may be a chip, a processing circuit, an integrated circuit, a system-on-chip (system-on-chip, SoC), or the like, and the interface may be a communication interface, an input/output interface, or the like. In this embodiment of this application, the logical circuit and the interface may be coupled to each other. A specific manner of a connection between the logical circuit and the interface is not limited in embodiments of this application.

This application further provides a computer-readable storage medium. The computer-readable storage medium stores a computer program or instructions. When the computer program or the instructions are run on a computer, the computer is caused to perform the methods in the foregoing embodiments.

This application further provides a computer program product. The computer program product includes instructions or a computer program. When the instructions or the computer program is run on a computer, the methods in the foregoing embodiments are performed.

This application further provides a communication system, including the first node and the second node.

This application further provides a chip. The chip includes a communication interface and a processor. The communication interface is configured to send/receive a signal of the chip. The processor is configured to execute computer program instructions, so that a communication apparatus including the chip performs the methods in the foregoing embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or a part of procedures or functions described in embodiments of this application are performed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, that integrates one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

## Claims

1. A communication method, wherein the method is applied to a first node in a telecommunication network, and the method comprises:
sending a first message, wherein the first message is for at least one of blockchain capability management, blockchain capability deployment, blockchain client management, blockchain client deployment, blockchain setup, blockchain removal, blockchain updating, blockchain configuration, blockchain parameter obtaining, subdomain blockchain deployment, or subdomain blockchain configuration; and
receiving a second message, wherein the second message is for responding to the first message.

2. The method according to claim 1, wherein that the first message is for blockchain capability management comprises:
the first message is for at least one of blockchain capability deletion, enabling, updating, locking, or disabling.

3. The method according to claim 2, wherein that the first message is for blockchain capability enabling comprises:
the first message is for enabling a blockchain capability of a second node in the telecommunication network, and the first message carries information indicating the blockchain capability of the second node; or
the first message is for enabling a blockchain capability of one or more nodes in a first subdomain, the first subdomain comprises one or more nodes managed by a second node, the second node is managed by the first node, and the first message carries information indicating the blockchain capability of the one or more nodes, and information indicating a quantity of nodes that support the blockchain capability in the first subdomain.

4. The method according to any one of claims 1 to 3, wherein that the first message is for blockchain capability deployment comprises:
the first message is for deploying a blockchain capability of a second node in the telecommunication network, the first message carries an installation package for the second node to deploy the blockchain capability and a first profile, and the first profile indicates the blockchain capability of the second node; or
the first message is for deploying a blockchain capability of one or more nodes in a first subdomain, the first subdomain comprises one or more nodes managed by a second node, the second node is managed by the first node, the first message carries an installation package for the one or more nodes to deploy the blockchain capability, a second profile, and information indicating a quantity of nodes that support the blockchain capability in the first subdomain, and the second profile indicates the blockchain capability of the one or more nodes.

5. The method according to any one of claims 1 to 4, wherein the first message is for setting up a blockchain comprising a second node in the telecommunication network, and the first message carries a profile of the blockchain comprising the second node; or
the first message is for setting up one or more blockchains in a first subdomain, the first subdomain comprises one or more nodes managed by a second node, the second node is managed by the first node, and the first message carries a profile of the one or more blockchains.

6. The method according to any one of claims 1 to 5, wherein the first message is for updating a blockchain comprising a second node in the telecommunication network, and the first message carries a profile for updating the blockchain comprising the second node; or
the first message is for updating one or more blockchains in a first subdomain, the first subdomain comprises one or more nodes managed by a second node, the second node is managed by the first node, and the first message carries a profile for updating the one or more blockchains.

7. The method according to any one of claims 1 to 6, wherein that the first message is for blockchain configuration comprises:
the first message is for blockchain connection configuration, and the blockchain connection configuration comprises at least one of blockchain connection method configuration, blockchain network topology configuration, or blockchain node list configuration.

8. The method according to any one of claims 1 to 7, wherein that the first message is for blockchain configuration comprises:
the first message is for blockchain node configuration, and the blockchain node configuration comprises at least one of blockchain node attribute configuration, blockchain node role configuration, or blockchain node running status configuration.

9. The method according to any one of claims 1 to 8, wherein that the first message is for blockchain parameter obtaining comprises:
the first message is for at least one of requesting a blockchain profile, subscribing to a blockchain profile, requesting a blockchain identity, requesting a blockchain type, requesting blockchain capability information, or subscribing to blockchain capability information.

10. The method according to any one of claims 1 to 9, wherein sending the first message comprises:
sending, by the first node, the first message to a second node by using a non-access-stratum protocol, wherein the first node is a core network element, and the second node is a terminal device; or
sending, by the first node, the first message to a second node by using a radio resource control protocol, wherein the first node is an access network device, and the second node is a terminal device; or
sending, by the first node, the first message to a second node by using a next-generation application protocol, wherein the first node is a core network element, and the second node is an access network device; or
sending, by the first node, the first message to a second node by using an Xn interface application procedure protocol, wherein the first node and the second node are different access network devices.

11. The method according to any one of claims 1 to 9, wherein sending the first message comprises:
sending, by the first node, the first message by using a blockchain control protocol, wherein the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

12. The method according to claim 11, wherein the blockchain control protocol is located at an upper layer of a second protocol layer, and the second protocol layer comprises a part or all of the following protocol layers: a protocol layer for data packet processing, a protocol layer for transmission, a protocol layer for connection setup, and a protocol layer for channel setup.

13. The method according to any one of claims 1 to 9, wherein when a second node is a terminal device, sending the first message comprises:
when the first node is a core network element, sending the first message to the second node by using a first blockchain control protocol; or
when the first node is an access network device, sending the first message to the second node by using a second blockchain control protocol, wherein the second blockchain control protocol is different from the first blockchain control protocol.

14. The method according to any one of claims 1 to 13, wherein the method further comprises:
receiving a third message, wherein the third message is for requesting to set up a blockchain, and the third message carries a blockchain service requirement parameter, or the third message is for de-registering a blockchain capability of a second node, or the third message is for registering a blockchain capability of a second node; and
sending a fourth message, wherein the fourth message is for responding to the third message.

15. A communication method, wherein the method is applied to a second node in a telecommunication network, and the method comprises:
receiving a first message, wherein the first message is for at least one of blockchain capability management, blockchain capability deployment, blockchain client management, blockchain client deployment, blockchain setup, blockchain removal, blockchain updating, blockchain configuration, blockchain parameter obtaining, subdomain blockchain deployment, or subdomain blockchain configuration; and
sending a second message, wherein the second message is for responding to the first message.

16. The method according to claim 15, wherein that the first message is for blockchain capability management comprises:
the first message is for at least one of blockchain capability deletion, enabling, updating, locking, or disabling.

17. The method according to claim 16, wherein that the first message is for blockchain capability enabling comprises:
the first message is for enabling a blockchain capability of the second node in the telecommunication network, and the first message carries information indicating the blockchain capability of the second node; or
the first message is for enabling a blockchain capability of one or more nodes in a first subdomain, the first subdomain comprises one or more nodes managed by the second node, the second node is managed by the first node, and the first message carries information indicating the blockchain capability of the one or more nodes, and information indicating a quantity of nodes that support the blockchain capability in the first subdomain.

18. The method according to any one of claims 15 to 17, wherein that the first message is for blockchain capability deployment comprises:
the first message is for deploying a blockchain capability of the second node in the telecommunication network, the first message carries an installation package for the second node to deploy the blockchain capability and a first profile, and the first profile indicates the blockchain capability of the second node; or
the first message is for deploying a blockchain capability of one or more nodes in a first subdomain, the first subdomain comprises one or more nodes managed by the second node, the second node is managed by the first node, the first message carries an installation package for the one or more nodes to deploy the blockchain capability, a second profile, and information indicating a quantity of nodes that support the blockchain capability in the first subdomain, and the second profile indicates the blockchain capability of the one or more nodes.

19. The method according to any one of claims 15 to 18, wherein the first message is for setting up a blockchain in the telecommunication network, and the first message carries a profile of the blockchain comprising the second node; or
the first message is for setting up one or more blockchains in a first subdomain, the first subdomain comprises one or more nodes managed by the second node, the second node is managed by the first node, and the first message carries a profile of the one or more blockchains.

20. The method according to any one of claims 15 to 19, wherein the first message is for updating a blockchain comprising the second node in the telecommunication network, and the first message carries a profile for updating the blockchain comprising the second node; or
the first message is for updating one or more blockchains in a first subdomain, the first subdomain comprises one or more nodes managed by the second node, the second node is managed by the first node, and the first message carries a profile for updating the one or more blockchains.

21. The method according to any one of claims 15 to 20, wherein that the first message is for blockchain configuration comprises:
the first message is for blockchain connection configuration, and the blockchain connection configuration comprises at least one of blockchain connection method configuration, blockchain network topology configuration, or blockchain node list configuration.

22. The method according to any one of claims 15 to 21, wherein that the first message is for blockchain configuration comprises:
the first message is for blockchain node configuration, and the blockchain node configuration comprises at least one of blockchain node attribute configuration, blockchain node role configuration, or blockchain node running status configuration.

23. The method according to any one of claims 15 to 22, wherein that the first message is for blockchain parameter obtaining comprises:
the first message is for at least one of requesting a blockchain profile, subscribing to a blockchain profile, requesting a blockchain identity, requesting a blockchain type, requesting blockchain capability information, or subscribing to blockchain capability information.

24. The method according to any one of claims 15 to 23, wherein receiving the first message comprises:
receiving, by the second node, the first message from a first node by using a non-access-stratum protocol, wherein the first node is an access network device, and the second node is a terminal device; or
receiving, by the first node, the first message from a first node by using a radio resource control protocol, wherein the first node is an access network device, and the second node is a terminal device; or
receiving, by the first node, the first message from a first node by using a next-generation application protocol, wherein the first node is a core network element, and the second node is an access network device; or
receiving, by the first node, the first message from a first node by using an Xn interface application procedure protocol, wherein the first node and the second node are different access network devices.

25. The method according to any one of claims 15 to 23, wherein receiving the first message comprises:
receiving, by the second node, the first message by using a blockchain control protocol, wherein the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

26. The method according to claim 25, wherein the blockchain control protocol is located at an upper layer of a second protocol layer, and the second protocol layer comprises a part or all of the following protocol layers: a protocol layer for data packet processing, a protocol layer for transmission, a protocol layer for connection setup, and a protocol layer for channel setup.

27. The method according to any one of claims 15 to 23, wherein receiving the first message comprises:
receiving, by the second node, the first message from a first node by using a first blockchain control protocol, wherein the second node is a terminal device, and the first node is a core network element; or
receiving, by the second node, the first message from a first node by using a second blockchain control protocol, wherein the second node is a terminal device, the first node is an access network device, and the second blockchain control protocol is different from the first blockchain control protocol.

28. The method according to any one of claims 15 to 27, wherein the method further comprises:
sending a third message, wherein the third message is for requesting to set up a blockchain, and the third message carries a blockchain service requirement parameter, or the third message is for de-registering a blockchain capability of the second node, or the third message is for registering a blockchain capability of the second node.

29. A communication method, wherein the method is applied to a second node in a telecommunication network, and the method comprises:
sending a third message, wherein the third message is for requesting to set up a blockchain, and the third message carries a blockchain service requirement parameter, or the third message is for de-registering a blockchain capability of the second node, or the third message is for registering a blockchain capability of the second node; and
receiving a fourth message, wherein the fourth message is for responding to the third message.

30. The method according to claim 29, wherein sending the third message comprises:
sending, by the second node, the third message to a first node by using a non-access-stratum protocol, wherein the second node is a terminal device, and the first node is a core network element; or
sending, by the second node, the third message to a first node by using a radio resource control protocol, wherein the second node is a terminal device, and the first node is an access network device; or
sending, by the second node, the third message to a first node by using a next-generation application protocol, wherein the second node is an access network device, and the first node is an access network device; or
sending, by the second node, the third message to a first node by using an Xn interface application procedure protocol, wherein the second node and the first node are different access network devices.

31. The method according to claim 29, wherein sending the third message comprises:
sending, by the second node, the third message by using a blockchain control protocol, wherein the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

32. The method according to claim 31, wherein the blockchain control protocol is located at an upper layer of a second protocol layer, and the second protocol layer comprises a part or all of the following protocol layers: a protocol layer for data packet processing, a protocol layer for transmission, a protocol layer for connection setup, and a protocol layer for channel setup.

33. The method according to claim 29, wherein sending the third message comprises:
when a first node is a core network element, sending, by the second node, the third message to the first node by using a first blockchain control protocol; or
when a first node is an access network device, sending, by the second node, the third message to the first node by using a second blockchain control protocol, wherein the second blockchain control protocol is different from the first blockchain control protocol.

34. A communication method, wherein the method is applied to a first node in a telecommunication network, and the method comprises:
receiving a third message, wherein the third message is for requesting to set up a blockchain, and the third message carries a blockchain service requirement parameter, or the third message is for de-registering a blockchain capability of a second node, or the third message is for registering a blockchain capability of a second node; and
sending a fourth message, wherein the fourth message is for responding to the third message.

35. The method according to claim 34, wherein receiving the third message comprises:
receiving, by the first node, the third message from the second node by using a non-access-stratum protocol, wherein the second node is a terminal device, and the first node is a core network element; or
receiving, by the second node, the third message from the second node by using a radio resource control protocol, wherein the second node is a terminal device, and the first node is an access network device; or
receiving, by the second node, the third message from the second node by using a next-generation application protocol, wherein the second node is an access network device, and the first node is an access network device; or
receiving, by the second node, the third message from the second node by using an Xn interface application procedure protocol, wherein the second node and the first node are different access network devices.

36. The method according to claim 34, wherein receiving the third message comprises:
receiving, by the first node, the third message by using a blockchain control protocol, wherein the blockchain control protocol is a protocol between different core network elements, or the blockchain control protocol is a protocol between a core network element and a terminal device, or the blockchain control protocol is a protocol between a core network element and an access network device, or the blockchain control protocol is a protocol between an access network device and a terminal device, or the blockchain control protocol is a protocol between different access network devices.

37. The method according to claim 36, wherein the blockchain control protocol is located at an upper layer of a second protocol layer, and the second protocol layer comprises a part or all of the following protocol layers: a protocol layer for data packet processing, a protocol layer for transmission, a protocol layer for connection setup, and a protocol layer for channel setup.

38. The method according to claim 35 or 36, wherein receiving the third message comprises:
when the first node is a core network element, receiving, by the first node, the third message by using a first blockchain control protocol; or
when the first node is an access network device, receiving, by the first node, the third message by using a second blockchain control protocol, wherein the second blockchain control protocol is different from the first blockchain control protocol.

39. The method according to any one of claims 34 to 38, wherein the first node is an access network device, and after receiving the third message, the method further comprises:
when the first node has a blockchain capability and a blockchain control function is deployed on the first node, parsing the third message, wherein the blockchain control function is a blockchain management and/or configuration function; or
when the first node has a blockchain capability and a blockchain control function is not deployed on the first node, forwarding the third message to a third node to which the first node belongs, wherein the blockchain control function is deployed on the third node; or
when the first node does not have a blockchain capability, forwarding the third message to a node on which the blockchain control function is deployed.

40. A communication apparatus, comprising a module or a unit configured to implement the method according to any one of claims 1 to 14 or any one of claims 34 to 39.

41. A communication apparatus, comprising a module or a unit configured to implement the method according to any one of claims 15 to 33.

42. A computer-readable storage medium, wherein the computer-readable storage medium stores a computer program, the computer program comprises program instructions, and when the program instructions are executed by a processor, the method according to any one of claims 1 to 39 is performed.

43. A communication apparatus, comprising a processor, wherein the processor is configured to execute instructions, to enable the communication apparatus to perform the method according to any one of claims 1 to 39.

44. A computer program product, wherein the computer program product comprises a computer program, the computer program comprises program instructions, and when the program instructions are executed, a computer is enabled to perform the method according to any one of claims 1 to 39.

45. A chip, comprising:
a communication interface, configured to receive/send a signal of the chip; and
a processor, configured to execute computer program instructions, to enable a communication apparatus comprising the chip to perform the method according to any one of claims 1 to 39.

46. A communication system, comprising the communication apparatus according to claim 40 and the communication apparatus according to claim 41.
